(19) Europäisches Patentamt
European Patent Office
Office européen des brevets

(11) Veröffentlichungsnummer: **0 058 346**
**B1**

# (12) EUROPÄISCHE PATENTSCHRIFT

(45) Veröffentlichungstag der Patentschrift: **16.01.85**

(51) Int. Cl.⁴: **C 07 C 161/00**, A 01 N 47/24

(21) Anmeldenummer: **82100775.4**

(22) Anmeldetag: **04.02.82**

(54) **N-sulfenylierte Oximcarbamate, Verfahren zu ihrer Herstellung und ihre Verwendung in Schädlingsbekämpfungsmitteln.**

(30) Priorität: **14.02.81 DE 3105400**

(43) Veröffentlichungstag der Anmeldung: **25.08.82 Patentblatt 82/34**

(45) Bekanntmachung des Hinweises auf die Patenterteilung: **16.01.85 Patentblatt 85/3**

(84) Benannte Vertragsstaaten: **AT BE CH DE FR GB IT LI NL**

(56) Entgegenhaltungen: **DE - A - 2 621 102**

(73) Patentinhaber: **BAYER AG, Konzernverwaltung RP Patentabteilung, D-5090 Leverkusen 1 Bayerwerk (DE)**

(72) Erfinder: **Schmetzer, Johannes, Dr., Jakob-Boehme-Strasse 21, D-5000 Köln 80 (DE)**
Erfinder: **Stetter, Jörg, Dr., Gellertweg 4, D-5600 Wuppertal 1 (DE)**
Erfinder: **Hammann, Ingeborg, Dr., Belfortstrasse 9, D-5000 Köln 1 (DE)**
Erfinder: **Homeyer, Bernhard, Dr., Obere Strasse 28, D-5090 Leverkusen 3 (DE)**

**EP 0 058 346 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue N-sulfenylierte-Oximcarbamate mehrere Verfahren zu ihrer Herstellung und ihre Verwendung in Schädlingsbekämpfungsmitteln.

Es ist bereits bekannt geworden, dass Methylthiosubstituierte Oximcarbamate wie z.B. 3,3-Dimethyl-2-methyl-carbamoyloximino-1-methylthio-butan (vgl. Deutsche Offenlegungsschrift 2 216 838) oder 1-Methylcarbamoyloximino-1-methylthio-ethan (vgl. Deutsche Offenlegungsschrift 1 567 142) insektizide und akarizide Eigenschaften besitzen. Diese befriedigen jedoch vor allem bei niedrigen Aufwandkonzentrationen nicht voll.

1. Es wurden die neuen N-sulfenylierten Oximcarbamate der Formel (I) gefunden,

$$\begin{array}{l} R^1 \ -C = N-OR^4 \\ \quad\ \ | \\ R^2X-C = N-OR^3 \end{array} \qquad (I)$$

in welcher

$R^1$ für Alkyl mit 1 bis 4 Kohlenstoffatomen, Halogenalkyl mit 1 bis 4 Kohlenstoffatomen und bis zu 5 Halogenatomen, Cycloalkyl mit bis zu 8 Kohlenstoffatomen, Alkoxyalkyl und Alkylthioalkyl mit bis zu 3 Kohlenstoffatomen in jedem Alkylteil oder für gegebenenfalls durch Halogen, CN, $NO_2$, $C_1$-$C_2$-Alkyl substituiertes Phenyl steht,

$R^2$ für Alkyl, Alkenyl, Alkinyl steht,

$R^1$ und $R^2$ gemeinsam für eine Alkylenbrücke mit 1 - 6 C-Atomen stehen und

einer der Reste $R^3$ oder $R^4$ für den Rest $-\overset{O}{\overset{\|}{C}}-NR^5-S-R^6$ steht während der andere Rest $R^3$ oder $R^4$ für Alkyl, Alkenyl, Alkinyl, Halogenalkyl, Halogenalkenyl oder Alkoxyalkyl steht,

$R^5$ für Alkyl steht und

$R^6$ für Alkyl mit 1 bis 4 Kohlenstoffatomen, Halogenalkyl mit 1 bis 2 Kohlenstoffatomen und bis zu 5 Halogenatomen, für gegebenenfalls durch Halogen, Alkyl ($C_1$-$C_2$), Halogenalkyl ($C_1$-$C_2$) substituiertes Phenyl, für Alkoxycarbonyl mit 1 bis 4 Kohlenstoffatomen im Alkoxyteil, für Dialkylamino mit 1 bis 4 Kohlenstoffatomen in jedem Alkylteil steht oder wobei $R^6$ für den gleichen Rest steht, an dem die Gruppierung $-SR^6$ gebunden ist sowie für die Gruppierung $NR^8-SO_2R^7$ steht,

wobei

$R^7$ für Alkyl mit 1 bis 4 Kohlenstoffatomen, Dialkylamino mit jeweils 1 bis 4 Kohlenstoffatomen in jedem Alkylteil sowie für gegebenenfalls durch Halogen, $C_1$-$C_2$-Halogenalkyl, CN oder $NO_2$ substituiertes Phenyl steht,

$R^8$ für Alkyl mit 1 bis 4 Kohlenstoffatomen steht und

X für O oder S steht.

Die Verbindungen der Formel (I) können in der syn- oder anti-Form vorliegen, vorwiegend fallen sie als Gemische beider Formen an.

2. Weiterhin wurde gefunden, dass N-sulfenylierte Oximcarbamate der Formel (I) hergestellt werden können, indem man

a) Oxime der Formel (II)

$$\begin{array}{l} R^1 \ -C = N-O-R^{10} \\ \quad\ \ | \\ R^2X-C = N-O-R^9 \end{array} \qquad (II)$$

in welcher

$R^1$, $R^2$ und X die oben angegebenen Bedeutungen haben,

einer der Reste $R^9$ oder $R^{10}$ für H steht und der andere Rest $R^9$ oder $R^{10}$ für Alkyl, Alkenyl, Alkinyl, Halogenalkyl, Halogenalkenyl oder Alkoxyalkyl steht mit sulfenylierten Carbamoylhalogeniden der Formel (III)

$$Hal-CO-N\begin{array}{l} R^5 \\ S-R^6 \end{array} \qquad (III)$$

in welcher

$R^5$ und $R^6$ die oben angegebene Bedeutung haben, und

Hal für Fluor oder Chlor steht,

in Gegenwart eines Verdünnungsmittels und eines säurebindenden Mittels umsetzt, oder

b) Oximcarbamate der Formel (IV)

$$\begin{array}{l} R^1 \ -C = NOR^{12} \\ \quad\ \ | \\ R^2X-C = NOR^{11} \end{array} \qquad (IV)$$

in welcher

$R^1$, $R^2$ und X die oben angegebene Bedeutung haben,

einer der Reste $R^{11}$ oder $R^{12}$ für den Rest $-\overset{O}{\overset{\|}{C}}-NH-R^5$ steht während der andere Rest $R^{11}$ oder $R^{12}$ für Alkyl, Alkenyl, Alkinyl, Halogenalkyl, Halogenalkenyl oder Alkoxyalkyl steht,

$R^5$ für Alkyl steht und

X für O oder S steht

mit Sulfenchloriden der Formel (V)

$$Cl-S-R^6 \qquad (V)$$

in welcher

$R^6$ die oben angegebene Bedeutung hat,

in Gegenwart eines Verdünnungsmittels und eines säurebindenden Mittels umsetzt.

Die Verbindungen der Formel (I) eignen sich zur Schädlingsbekämpfung insbesondere besitzen sie starke insektizide akarizide und nematizide Eigenschaften.

Überraschenderweise zeigen die Verbindungen der Formel (I) eine höhere, insektizide und akarizide Wirkung als ähnliche bekannte Verbindungen gleicher Wirkungsrichtung.

Die erfindungsgemässen N-sulfenylierten Oximcarbamate sind durch die Formel (I) allgemein definiert. Als Halogensubstituenten von $R^1$ kommen insbesondere Fluor, Chlor und Brom in Frage. $R^2$ steht vorzugsweise für Alkyl mit 1 bis 4 Kohlenstoffatomen, Alkenyl mit 2 bis 4 Kohlenstoffatomen und Alkinyl mit 2 bis 4 Kohlenstoffatomen. $R^1$ und $R^2$ stehen auch gemeinsam für eine gegebenenfalls methylsubstituierte Methylen, Ethylen oder Propy-

len-Brücke. $R^3$ oder $R^4$ stehen vorzugsweise für Alkyl mit 1 bis 4 Kohlenstoffatomen, Alkenyl mit 2 bis 4 Kohlenstoffatomen, Alkinyl mit 2 bis 4 Kohlenstoffatomen, Halogenalkyl mit 1-4 Kohlenstoffatomen und bis zu 5 Halogenatomen, Halogenalkenyl mit 2 bis 4 Kohlenstoffatomen und bis zu 5 Halogenatomen, Alkoxyalkyl mit bis zu 2 Kohlenstoffatomen in jedem Alkylteil und für den Rest $\overset{O}{\overset{\|}{C}}-NR^5-S-R^6$ (dabei muss jeweils einer der Reste $R^3$ oder $R^4$ für den Rest $-\overset{O}{\overset{\|}{C}}-NR^5-S-R^6$ stehen). $R^5$ steht vorzugsweise für Methyl oder Ethyl.

Als Halogenatome für
$R^6$ = Halogenalkyl mit 1 bis 2 Kohlenstoffatomen und bis zu 5 Halogenatomen kommen insbesondere Fluor- und Chloratome in Frage, beispielsweise seien als derartige Reste Trifluormethyl, Chlor-difluor-methyl, Dichlor-fluor-methyl und Trichlormethyl genannt.

Als Halogenatome für
$R^6$ = durch Halogen substituiertes Phenyl kommen vorzugsweise Fluor, Chlor oder Brom in Frage,
als Halogenatome für
$R^6$ = durch Halogenalkyl ($C_1$ - $C_2$) substituiertes Phenyl kommen insbesondere Fluor- oder Chloratome in Frage, beispielsweise sei Trifluormethyl genannt.

Als Halogenatome für
$R^7$ = durch Halogen substituiertes Phenyl kommen insbesondere Fluor, Chlor oder Brom in Frage.

Als Halogenatome für
$R^7$ = durch $C_1$-$C_2$-Halogenalkyl substituiertes Phenyl kommen insbesondere Fluor- oder Chloratome in Frage, beispielsweise sei Trifluormethyl genannt.

Ganz besonders bevorzugt sind diejenigen N-sulfenylierten Oximcarbamate der Formel (I), in denen $R^1$ für Methyl, Isopropyl, tert.-Butyl, Fluor-, Chlor-, Difluor-, Dichlor-tert.-Butyl steht; $R^2$ für Methyl oder Ethyl steht; $R^1$ und $R^2$ für eine Ethylenbrücke stehen; $R^3$ oder $R^4$ für Methyl, Ethyl, Allyl, Propargyl oder $-\overset{O}{\overset{\|}{C}}-N(CH_3)-S-R^6$ stehen [dabei muss jeweils einer der Reste $R^3$ oder $R^4$ für $-\overset{O}{\overset{\|}{C}}-N(CH_3)-S-R^6$ stehen] und $R^6$ für Trichlormethyl, Dichlor-fluor-methyl, Halogenalkyl- oder Alkyl substituiertes Phenyl steht, sowie für den gleichen Rest an den die Gruppierung $-S-R^6$ gebunden ist. X steht bevorzugt für S.

Im einzelnen seien ausser den Herstellungsbeispielen und den Beispielen der Tabelle die folgenden Verbindungen genannt.

$$\begin{array}{l} R^1 - C = N - O - R^4 \\ \quad\;\; | \\ R^2S - C = N - O - R^3 \end{array} \qquad (I)$$

| $R^1$ | $R^2$ | $R^3$ | $R^4$ | $R^6$ |
|---|---|---|---|---|
| $CH_3)_3C-$ | $CH_3$ | $CH_3$ | $-\overset{O}{\overset{\|}{C}}-\overset{CH_3}{\overset{|}{N}}-S-R^6$ | $CCl_3$ |
| » | $CH_3$ | $C_2H_5$ | » | » |
| » | $CH_3$ | $-CH_2-C=CH$ | » | » |
| » | $CH_3$ | $-CH_2-CH=CH_2$ | » | » |
| » | $C_2H_5$ | $CH_3$ | » | » |
| » | $C_2H_5$ | $C_2H_5$ | » | » |
| » | $C_2H_5$ | $-CH_2-C\equiv CH$ | » | » |
| » | $C_2H_5$ | $-CH_2-CH=CH_2$ | » | » |
| » | $CH_3$ | $CH_3$ | » | $CCl_2F$ |
| » | $CH_3$ | $C_2H_5$ | » | » |
| » | $CH_3$ | $-CH_2-C\equiv CH$ | » | » |
| » | $Ch_3$ | $-CH_2-CH=CH_2$ | » | » |
| » | $C_2H_5$ | $CH_3$ | » | » |
| » | $C_2H_5$ | $C_2H_5$ | » | » |
| » | $C_2H_5$ | $-CH_2-C\equiv CH$ | » | » |
| » | $C_2H_5$ | $-CH_2-CH=CH_2$ | » | » |
| » | $CH_3$ | $CH_3$ | » | 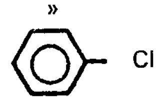 |
| » | $CH_3$ | $-CH_2-C\equiv CH$ | » | » |
| » | $CH_3$ | $-CH_2-CH=CH_2$ | » | » |
| » | $C_2H_5$ | $CH_3$ | » | » |
| » | $C_2H_5$ | $C_2H_5$ | » | » |
| » | $C_2H_5$ | $-CH_2-C\equiv CH$ | » | » |
| » | $C_2H_5$ | $-CH_2-CH=CH_2$ | » | » |
| » | $CH_3$ | $CH_3$ | » | dimer |
| » | $CH_3$ | $C_2H_5$ | » | » |

| $R^1$ | $R^2$ | $R^3$ | $R^4$ | $R^6$ |
|---|---|---|---|---|
| $(CH_3)_3C-$ | $CH_3$ | $-CH_2-C\equiv CH$ | O CH$_3$<br>‖ \|<br>$-C-N-S-R^6$ | dimer |
| » | $CH_3$ | $-CH_2-CH=CH_2$ | » | » |
| » | $C_2H_5$ | $CH_3$ | » | » |
| » | $C_2H_5$ | $C_2H_5$ | » | » |
| » | $C_2H_5$ | $-CH_2-C\equiv CH$ | » | » |
| » | $C_2H_5$ | $-CH_2-CH=CH_2$ | » | » |
| $R^1 + R^2$<br>$CH_3$<br>\|<br>$-C-CH_2-$<br>\|<br>$CH_3$ | | $CH_3$ | O $CH_3$<br>‖ \|<br>$-C-N-S-R^6$ | $CCl_3$ |
| » | | $C_2H_5$ | » | $CCl_3$ |
| » | | $CH_3$ | » | $CCl_2F$ |
| » | | $C_2H_5$ | » | $CCl_2F$ |
| » | | $CH_3$ | » | |
| » | | $C_2H_5$ | » | |
| » | | $CH_3$ | » | dimer |
| » | | $C_2H_5$ | » | dimer |
| $R^1 + R^2$<br>$-CH_2-CH_2-$ | | $CH_3$ | » | $CCl_3$ |
| » | | $C_2H_5$ | » | $CCl_3$ |
| » | | $CH_3$ | » | $CCl_2F$ |
| » | | $C_2H_5$ | » | $CCl_2F$ |
| » | | $CH_3$ | » | 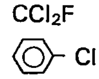 |
| » | | $C_2H_5$ | » | 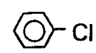 |
| » | | $C_2H_5$ | » | dimer |
| » | | $C_2H_5$ | » | dimer |
| $(CH_3)_2HC-$ | $CH_3$ | $CH_3$ | » | $CCl_3$ |
| » | $CH_3$ | $C_2H_5$ | » | » |
| » | $CH_3$ | $-CH_2-C\equiv CH$ | » | » |
| » | $CH_3$ | $-CH_2-CH=CH_2$ | » | » |
| » | $C_2H_5$ | $CH_3$ | » | » |
| » | $C_2H_5$ | $C_2H_5$ | » | » |
| » | $C_2H_5$ | $-CH_2-C\equiv CH$ | » | » |
| » | $C_2H_5$ | $-CH_2-CH=CH_2$ | » | » |
| » | $CH_3$ | $CH_3$ | » | $CCl_2F$ |
| » | $CH_3$ | $C_2H_5$ | » | » |
| » | $CH_3$ | $-CH_2-C\equiv CH$ | » | » |
| » | $CH_3$ | $-CH_2-CH=CH_2$ | » | » |
| » | $C_2H_5$ | $CH_3$ | » | » |
| » | $C_2H_5$ | $C_2H_5$ | » | » |
| » | $C_2H_5$ | $-CH_2-C\equiv CH$ | » | » |
| » | $C_2H_5$ | $-CH_2-CH=CH_2$ | » | » |
| » | $CH_3$ | $CH_3$ | » | 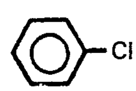 |
| » | $CH_3$ | $C_2H_5$ | » | » |
| » | $CH_3$ | $-CH_2-C\equiv CH$ | » | » |
| » | $CH_3$ | $-CH_2-CH=CH_2$ | » | » |
| » | $C_2H_5$ | $CH_3$ | » | » |
| » | $C_2H_5$ | $C_2H_5$ | » | » |
| » | $C_2H_5$ | $-CH_2-C\equiv CH$ | » | » |

| $R^1$ | $R^2$ | $R^3$ | $R^4$ | $R^6$ |
|---|---|---|---|---|
| $(CH_3)_2HC-$ | $C_2H_5$ | $-CH_2-CH=CH_2$ | O CH₃<br>‖ \|<br>-C-N-S-$R^6$ | 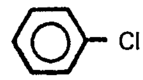 |
| » | $CH_3$ | $CH_3$ | » | dimer |
| » | $CH_3$ | $C_2H_5$ | » | » |
| » | $CH_3$ | $-CH_2-C\equiv CH$ | » | » |
| » | $CH_3$ | $-CH_2-CH=CH_2$ | » | » |
| » | $C_2H_5$ | $CH_3$ | » | » |
| » | $C_2H_5$ | $C_2H_5$ | » | » |
| » | $C_2H_5$ | $-CH_2-C\equiv CH$ | » | » |
| » | $C_2H_5$ | $-CH_2-CH=CH_2$ | » | » |
| CH₃<br>\|<br>$CH_3S-C-$<br>\|<br>CH₃ | $CH_3$ | $CH_3$ | » | $CCl_3$ |
| » | $CH_3$ | $C_2H_5$ | » | » |
| » | $C_2H_5$ | $CH_3$ | » | » |
| » | $C_2H_5$ | $C_2H_5$ | » | » |
| » | $CH_3$ | $CH_3$ | » | $CCl_2F$ |
| » | $CH_3$ | $C_2H_5$ | » | » |
| » | $C_2H_5$ | $CH_3$ | » | » |
| » | $C_2H_5$ | $C_2H_5$ | » | » |
| » | $CH_3$ | $CH_3$ | » | 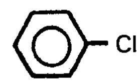 |
| » | $CH_3$ | $C_2H_5$ | » | » |
| » | $C_2H_5$ | $CH_3$ | » | » |
| » | $C_2H_5$ | $C_2H_5$ | » | » |
| » | $CH_3$ | $CH_3$ | » | dimer |
| » | $CH_3$ | $C_2H_5$ | » | » |
| » | $C_2H_5$ | $CH_3$ | » | » |
| » | $C_2H_5$ | $C_2H_5$ | » | » |
| CH₃<br>\|<br>$FCH_2-C-$<br>\|<br>CH₃ | $CH_3$ | $CH_3$ | » | $CCl_3$ |
| » | $CH_3$ | $C_2H_5$ | » | » |
| » | $C_2H_5$ | $CH_3$ | » | » |
| » | $C_2H_5$ | $C_2H_5$ | » | » |
| » | $CH_3$ | $CH_3$ | » | $CCl_2F$ |
| » | $CH_3$ | $C_2H_5$ | » | » |
| » | $C_2H_5$ | $CH_3$ | » | » |
| » | $C_2H_5$ | $C_2H_5$ | » | » |
| » | $CH_3$ | $CH_3$ | » | 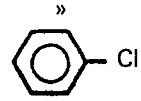 |
| » | $CH_3$ | $C_2H_5$ | » | » |
| » | $C_2H_5$ | $CH_3$ | » | » |
| » | $C_2H_5$ | $C_2H_5$ | » | » |
| » | $CH_3$ | $CH_3$ | » | dimer |
| » | $CH_3$ | $C_2H_5$ | » | » |
| » | $C_2H_5$ | $CH_3$ | » | » |
| » | $C_2H_5$ | $C_2H_5$ | » | » |
| CH₃<br>\|<br>$ClCH_2-C-$<br>\|<br>CH₃ | $CH_3$ | $CH_3$ | » | $CCl_3$ |
| » | $CH_3$ | $C_2H_5$ | » | » |

<table>
<tr><th>$R^1$</th><th>$R^2$</th><th>$R^3$</th><th>$R^4$</th><th>$R^6$</th></tr>
<tr><td>$CH_3$<br>|<br>$ClCH_2$-C-<br>|<br>$CH_3$</td><td>$C_2H_5$</td><td>$CH_3$</td><td>O $CH_3$<br>|| |<br>-C-N-S-$R^6$</td><td>$CCl_3$</td></tr>
<tr><td>»</td><td>$C_2H_5$</td><td>$C_2H_5$</td><td>»</td><td>»</td></tr>
<tr><td>»</td><td>$CH_3$</td><td>$CH_3$</td><td>»</td><td>$CCl_2F$</td></tr>
<tr><td>»</td><td>$CH_3$</td><td>$C_2H_5$</td><td>»</td><td>»</td></tr>
<tr><td>»</td><td>$C_2H_5$</td><td>$CH_3$</td><td>»</td><td>»</td></tr>
<tr><td>»</td><td>$C_2H_5$</td><td>$C_2H_5$</td><td>»</td><td>»</td></tr>
<tr><td>»</td><td>$CH_3$</td><td>$CH_3$</td><td>»</td><td>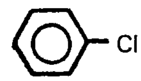</td></tr>
<tr><td>»</td><td>$CH_3$</td><td>$C_2H_5$</td><td>»</td><td>»</td></tr>
<tr><td>»</td><td>$C_2H_5$</td><td>$CH_3$</td><td>»</td><td>»</td></tr>
<tr><td>»</td><td>$C_2H_5$</td><td>$C_2H_5$</td><td>»</td><td>»</td></tr>
<tr><td>»</td><td>$CH_3$</td><td>$CH_3$</td><td>»</td><td>dimer</td></tr>
<tr><td>»</td><td>$CH_3$</td><td>$C_2H_5$</td><td>»</td><td>»</td></tr>
<tr><td>»</td><td>$C_2H_5$</td><td>$CH_3$</td><td>»</td><td>»</td></tr>
<tr><td>»</td><td>$C_2H_5$</td><td>$C_2H_5$</td><td>»</td><td>»</td></tr>
<tr><td>$CH_2F$<br>|<br>$FCH_2$-C-<br>|<br>$CH_3$</td><td>$CH_3$</td><td>$CH_3$</td><td>»</td><td>$CCl_3$</td></tr>
<tr><td>»</td><td>$CH_3$</td><td>$C_2H_5$</td><td>»</td><td>»</td></tr>
<tr><td>»</td><td>$C_2H_5$</td><td>$CH_3$</td><td>»</td><td>»</td></tr>
<tr><td>»</td><td>$C_2H_5$</td><td>$C_2H_5$</td><td>»</td><td>»</td></tr>
<tr><td>»</td><td>$CH_3$</td><td>$CH_3$</td><td>»</td><td>$CCl_2F$</td></tr>
<tr><td>»</td><td>$CH_3$</td><td>$C_2H_5$</td><td>»</td><td>»</td></tr>
<tr><td>»</td><td>$C_2H_5$</td><td>$CH_3$</td><td>»</td><td>»</td></tr>
<tr><td>»</td><td>$C_2H_5$</td><td>$C_2H_5$</td><td>»</td><td>»</td></tr>
<tr><td>»</td><td>$CH_3$</td><td>$CH_3$</td><td>»</td><td>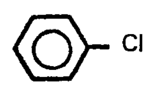</td></tr>
<tr><td>»</td><td>$CH_3$</td><td>$C_2H_5$</td><td>»</td><td>»</td></tr>
<tr><td>»</td><td>$C_2H_5$</td><td>$CH_3$</td><td>»</td><td>»</td></tr>
<tr><td>»</td><td>$C_2H_5$</td><td>$C_2H_5$</td><td>»</td><td>»</td></tr>
<tr><td>»</td><td>$CH_3$</td><td>$CH_3$</td><td>»</td><td>dimer</td></tr>
<tr><td>»</td><td>$CH_3$</td><td>$C_2H_5$</td><td>»</td><td>»</td></tr>
<tr><td>»</td><td>$C_2H_5$</td><td>$CH_3$</td><td>»</td><td>»</td></tr>
<tr><td>»</td><td>$C_2H_5$</td><td>$C_2H_5$</td><td>»</td><td>»</td></tr>
<tr><td>$CH_3$</td><td>$CH_3$</td><td>$CH_3$</td><td>»</td><td>$CCl_3$</td></tr>
<tr><td>»</td><td>$CH_3$</td><td>$C_2H_5$</td><td>»</td><td>»</td></tr>
<tr><td>»</td><td>$CH_3$</td><td>$-CH_2-C\equiv CH$</td><td>»</td><td>»</td></tr>
<tr><td>»</td><td>$CH_3$</td><td>$-CH_2-CH=CH_2$</td><td>»</td><td>»</td></tr>
<tr><td>»</td><td>$C_2H_5$</td><td>$CH_3$</td><td>»</td><td>»</td></tr>
<tr><td>»</td><td>$C_2H_5$</td><td>$C_2H_5$</td><td>»</td><td>»</td></tr>
<tr><td>»</td><td>$C_2H_5$</td><td>$-CH_2-C\equiv CH$</td><td>»</td><td>»</td></tr>
<tr><td>»</td><td>$C_2H_5$</td><td>$-CH_2-CH=CH_2$</td><td>»</td><td>»</td></tr>
<tr><td>»</td><td>$CH_3$</td><td>$CH_3$</td><td>»</td><td>$CCl_2F$</td></tr>
<tr><td>»</td><td>$CH_3$</td><td>$C_2H_5$</td><td>»</td><td>»</td></tr>
<tr><td>»</td><td>$CH_3$</td><td>$-CH_2-C\equiv CH$</td><td>»</td><td>»</td></tr>
<tr><td>»</td><td>$CH_3$</td><td>$-CH_2-CH=CH_2$</td><td>»</td><td>»</td></tr>
<tr><td>»</td><td>$C_2H_5$</td><td>$CH_3$</td><td>»</td><td>»</td></tr>
<tr><td>»</td><td>$C_2H_5$</td><td>$C_2H_5$</td><td>»</td><td>»</td></tr>
<tr><td>»</td><td>$C_2H_5$</td><td>$-CH_2-C\equiv CH$</td><td>»</td><td>»</td></tr>
<tr><td>»</td><td>$C_2H_5$</td><td>$-CH_2-CH=CH_2$</td><td>»</td><td>»</td></tr>
<tr><td>»</td><td>$CH_3$</td><td>$CH_3$</td><td>»</td><td>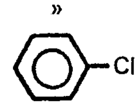</td></tr>
<tr><td>»</td><td>$CH_3$</td><td>$C_2H_5$</td><td>»</td><td>»</td></tr>
</table>

| $R^1$ | $R^2$ | $R^3$ | $R^4$ | $R^6$ |
|---|---|---|---|---|
| $CH_3$ | $CH_3$ | $-CH_2-C\equiv CH$ | O $CH_3$<br>‖ \|<br>$-C-N-S-R^6$ | 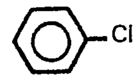 |
| » | $CH_3$ | $-CH_2-CH=CH_2$ | » | » |
| » | $C_2H_5$ | $CH_3$ | » | » |
| » | $C_2H_5$ | $C_2H_5$ | » | » |
| » | $C_2H_5$ | $-CH_2-C\equiv CH$ | » | » |
| » | $C_2H_5$ | $-CH_2-CH=CH_2$ | » | » |
| » | $CH_3$ | $CH_3$ | » | dimer |
| » | $CH_3$ | $C_2H_5$ | » | » |
| » | $CH_3$ | $-CH_2-C\equiv CH$ | » | » |
| » | $CH_3$ | $-CH_2-CH=CH_2$ | » | » |
| » | $C_2H_5$ | $CH_3$ | » | » |
| » | $C_2H_5$ | $C_2H_5$ | » | » |
| » | $C_2H_5$ | $-CH_2-C\equiv CH$ | » | » |
| » | $C_2H_5$ | $-CH_2-CH=CH_2$ | » | » |
| $(CH_3)_3C-$ | $CH_3$ | O $CH_3$<br>‖ \|<br>$-C-N-S-R^6$ | $CH_3$ | $CCl_3$ |
| » | $CH_3$ | » | $C_2H_5$ | » |
| » | $CH_3$ | » | $-CH_2-C\equiv CH$ | » |
| » | $CH_3$ | » | $-CH_2-CH=CH_2$ | » |
| » | $C_2H_5$ | » | $CH_3$ | » |
| » | $C_2H_5$ | » | $C_2H_5$ | » |
| » | $C_2H_5$ | » | $-CH_2-C\equiv CH$ | » |
| » | $C_2H_5$ | » | $-CH_2-CH=CH_2$ | » |
| » | $CH_3$ | » | $CH_3$ | $CCl_2F$ |
| » | $CH_3$ | » | $C_2H_5$ | » |
| » | $CH_3$ | » | $-CH_2-C\equiv CH$ | » |
| » | $CH_3$ | » | $-CH_2-CH=CH_2$ | » |
| » | $C_2H_5$ | » | $CH_3$ | » |
| » | $C_2H_5$ | » | $C_2H_5$ | » |
| » | $C_2H_5$ | » | $-CH_2-C\equiv CH$ | » |
| » | $C_2H_5$ | » | $-CH_2-CH=CH_2$ | » |
| » | $CH_3$ | » | $CH_3$ | 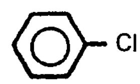 |
| » | $CH_3$ | » | $C_2H_5$ | » |
| » | $CH_3$ | » | $-CH_2-C\equiv CH$ | » |
| » | $CH_3$ | » | $-CH_2-CH=CH_2$ | » |
| » | $C_2H_5$ | » | $CH_3$ | » |
| » | $C_2H_5$ | » | $C_2H_5$ | » |
| » | $C_2H_5$ | » | $-CH_2-C\equiv CH$ | » |
| » | $C_2H_5$ | » | $-CH_2-CH=CH_2$ | » |
| » | $CH_3$ | » | $CH_3$ | dimer |
| » | $CH_3$ | » | $C_2H_5$ | » |
| » | $CH_3$ | » | $-CH_2-C\equiv CH$ | » |
| » | $CH_3$ | » | $-CH_2-CH=CH_2$ | » |
| » | $C_2H_5$ | » | $CH_3$ | » |
| » | $C_2H_5$ | » | $C_2H_5$ | » |
| » | $C_2H_5$ | » | $-CH_2-C\equiv CH$ | » |
| » | $C_2H_5$ | » | $-CH_2-CH=CH_2$ | » |
| $R^1 + R^2$<br>$CH_3$<br>\|<br>$-C-CH_2-$<br>\|<br>$CH_3$ | | » | $CH_3$ | $CCl_3$ |
| » | | » | $C_2H_5$ | » |

| $R^1$ | $R^2$ | $R^3$ | $R^4$ | $R^6$ |
|---|---|---|---|---|
| 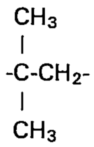 | | 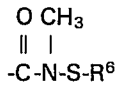 | $CH_3$ | $CCl_2F$ |
| » | | » | $C_2H_5$ | » |
| » | | » | $CH_3$ | 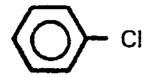 |
| » | | » | $C_2H_5$ | |
| » | | » | $CH_3$ | dimer |
| » | | » | $C_2H_5$ | » |
| $R^1$ + $R^2$ | | | | |
| $-CH_2—CH_2-$ | | » | $CH_3$ | $CCl_3$ |
| » | | » | $C_2H_5$ | » |
| » | | » | $CH_3$ | $CCl_2F$ |
| » | | » | $C_2H_5$ | » |
| » | | » | $CH_3$ | 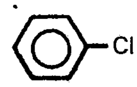 |
| » | | » | $C_2H_5$ | » |
| » | | » | $CH_3$ | dimer |
| » | | » | $C_2H_5$ | » |
| $(CH_3)_2HC-$ | $CH_3$ | » | $CH_3$ | $CCl_3$ |
| » | $CH_3$ | » | $C_2H_5$ | » |
| » | $CH_3$ | » | $-CH_2-C\equiv CH$ | » |
| » | $CH_3$ | » | $-CH_2-CH=CH_2$ | » |
| » | $C_2H_5$ | » | $CH_3$ | » |
| » | $C_2H_5$ | » | $C_2H_5$ | » |
| » | $C_2H_5$ | » | $-CH_2-C\equiv CH$ | » |
| » | $C_2H_5$ | » | $-CH_2-CH=CH_2$ | » |
| » | $CH_3$ | » | $CH_3$ | $CCl_2F$ |
| » | $CH_3$ | » | $C_2H_5$ | » |
| » | $CH_3$ | » | $-CH_2-C\equiv CH$ | » |
| » | $CH_3$ | » | $-CH_2-CH=CH_2$ | » |
| » | $C_2H_5$ | » | $CH_3$ | » |
| » | $C_2H_5$ | » | $C_2H_5$ | » |
| » | $C_2H_5$ | » | $-CH_2-C\equiv CH$ | » |
| » | $C_2H_5$ | » | $-CH_2-CH=CH_2$ | » |
| » | $CH_3$ | » | $CH_3$ | 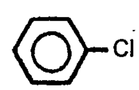 |
| » | $CH_3$ | » | $C_2H_5$ | » |
| » | $CH_3$ | » | $-CH_2-C\equiv CH$ | » |
| » | $CH_3$ | » | $-CH_2-CH=CH_2$ | » |
| » | $C_2H_5$ | » | $CH_3$ | » |
| » | $C_2H_5$ | » | $C_2H_5$ | » |
| » | $C_2H_5$ | » | $-CH_2-C\equiv CH$ | » |
| » | $C_2H_5$ | » | $-CH_2-CH=CH_2$ | » |
| » | $CH_3$ | » | $CH_3$ | dimer |
| » | $CH_3$ | » | $C_2H_5$ | » |
| » | $CH_3$ | » | $-CH_2-C\equiv CH$ | » |
| » | $CH_3$ | » | $-CH_2-CH=CH_2$ | » |
| » | $C_2H_5$ | » | $CH_3$ | » |
| » | $C_2H_5$ | » | $C_2H_5$ | » |
| » | $C_2H_5$ | » | $-CH_2-C\equiv CH$ | » |
| » | $C_2H_5$ | » | $-CH_2-CH=CH_2$ | » |

| $R^1$ | $R^2$ | $R^3$ | $R^4$ | $R^6$ |
|---|---|---|---|---|
| $CH_3$<br>$CH_3S$-C-<br>$CH_3$ | $CH_3$ | O $CH_3$<br>-C-N-S-$R^6$ | $CH_3$ | $CCl_3$ |
| » | $CH_3$ | » | $C_2H_5$ | » |
| » | $C_2H_5$ | » | $CH_3$ | » |
| » | $C_2H_5$ | » | $C_2H_5$ | » |
| » | $CH_3$ | » | $CH_3$ | $CCl_2F$ |
| » | $CH_3$ | » | $C_2H_5$ | » |
| » | $C_2H_5$ | » | $CH_3$ | » |
| » | $C_2H_5$ | » | $C_2H_5$ | » |
| » | $CH_3$ | » | $CH_3$ | 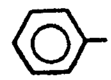 Cl |
| » | $CH_3$ | » | $C_2H_5$ | » |
| » | $C_2H_5$ | » | $CH_3$ | » |
| » | $C_2H_5$ | » | $C_2H_5$ | » |
| » | $CH_3$ | » | $CH_3$ | dimer |
| » | $CH_3$ | » | $C_2H_5$ | » |
| » | $C_2H_5$ | » | $CH_3$ | » |
| » | $C_2H_5$ | » | $C_2H_5$ | » |
| $CH_3$<br>$FCH_2$-C-<br>$CH_3$ | $CH_3$ | » | $C_2H_5$ | $CCl_3$ |
| » | $C_2H_5$ | » | $CH_3$ | » |
| » | $C_2H_5$ | » | $C_2H_5$ | » |
| » | $CH_3$ | » | $C_2H_5$ | $CCl_2F$ |
| » | $C_2H_5$ | » | $CH_3$ | » |
| » | $C_2H_5$ | » | $C_2H_5$ | » |
| » | $CH_3$ | » | $C_2H_5$ | 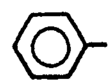 Cl |
| » | $CH_3$ | » | $C_2H_5$ | » |
| » | $C_2H_5$ | » | $CH_3$ | » |
| » | $C_2H_5$ | » | $C_2H_5$ | » |
| » | $CH_3$ | » | $CH_3$ | dimer |
| » | $CH_3$ | » | $C_2H_5$ | » |
| » | $C_2H_5$ | » | $CH_3$ | » |
| » | $C_2H_5$ | » | $C_2H_5$ | » |
| $CH_3$<br>$ClCH_2$-C-<br>$CH_3$ | $CH_3$ | » | $CH_3$ | $CCl_3$ |
| » | $CH_3$ | » | $C_2H_5$ | » |
| » | $C_2H_5$ | » | $CH_3$ | » |
| » | $C_2H_5$ | » | $C_2H_5$ | » |
|  | $CH_3$ | » | $CH_3$ | $CCl_2F$ |
| » | $CH_3$ | » | $C_2H_5$ | » |
| » | $C_2H_5$ | » | $CH_3$ | » |
| » | $C_2H_5$ | » | $C_2H_5$ | » |
| » | $CH_3$ | » | $CH_3$ | 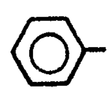 Cl |
| » | $CH_3$ | » | $C_2H_5$ | » |
| » | $C_2H_5$ | » | $CH_3$ | » |
| » | $C_2H_5$ | » | $C_2H_5$ | » |

<table>
<tr><th>R1</th><th>R2</th><th>R3</th><th>R4</th><th>R6</th></tr>
<tr><td>$CH_3$<br>|<br>$ClCH_2$-C-<br>|<br>$CH_3$</td><td>$CH_3$</td><td>O $CH_3$<br>‖ |<br>-C-N-S-$R^6$</td><td>$CH_3$</td><td>dimer</td></tr>
<tr><td>»</td><td>$CH_3$</td><td>»</td><td>$C_2H_5$</td><td>»</td></tr>
<tr><td>»</td><td>$C_2H_5$</td><td>»</td><td>$CH_3$</td><td>»</td></tr>
<tr><td>»</td><td>$C_2H_5$</td><td>»</td><td>$C_2H_5$</td><td>»</td></tr>
<tr><td>$CH_2F$<br>|<br>$FCH_2$-C-<br>|<br>$CH_3$</td><td>$CH_3$</td><td>»</td><td>$CH_3$</td><td>$CCl_3$</td></tr>
<tr><td>»</td><td>$CH_3$</td><td>»</td><td>$C_2H_5$</td><td>»</td></tr>
<tr><td>»</td><td>$C_2H_5$</td><td>»</td><td>$CH_3$</td><td>»</td></tr>
<tr><td>»</td><td>$C_2H_5$</td><td>»</td><td>$C_2H_5$</td><td>»</td></tr>
<tr><td>»</td><td>$CH_3$</td><td>»</td><td>$CH_3$</td><td>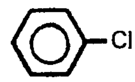</td></tr>
<tr><td>»</td><td>$CH_3$</td><td>»</td><td>$C_2H_5$</td><td>»</td></tr>
<tr><td>»</td><td>$C_2H_5$</td><td>»</td><td>$CH_3$</td><td>»</td></tr>
<tr><td>»</td><td>$C_2H_5$</td><td>»</td><td>$C_2H_5$</td><td>»</td></tr>
<tr><td>»</td><td>$CH_3$</td><td>»</td><td>$CH_3$</td><td>dimer</td></tr>
<tr><td>»</td><td>$CH_3$</td><td>»</td><td>$C_2H_5$</td><td>»</td></tr>
<tr><td>»</td><td>$C_2H_5$</td><td>»</td><td>$CH_3$</td><td>»</td></tr>
<tr><td>»</td><td>$C_2H_5$</td><td>»</td><td>$C_2H_5$</td><td>»</td></tr>
<tr><td>$CH_3$</td><td>$CH_3$</td><td>»</td><td>$CH_3$</td><td>$CCl_3$</td></tr>
<tr><td>»</td><td>$CH_3$</td><td>»</td><td>$C_2H_5$</td><td>»</td></tr>
<tr><td>»</td><td>$CH_3$</td><td>»</td><td>$-CH_2-C\equiv CH$</td><td>»</td></tr>
<tr><td>»</td><td>$CH_3$</td><td>»</td><td>$-CH_2-CH=CH_2$</td><td>»</td></tr>
<tr><td>»</td><td>$C_2H_5$</td><td>»</td><td>$CH_3$</td><td>»</td></tr>
<tr><td>»</td><td>$C_2H_5$</td><td>»</td><td>$C_2H_5$</td><td>»</td></tr>
<tr><td>»</td><td>$C_2H_5$</td><td>»</td><td>$-CH_2-C\equiv CH$</td><td>»</td></tr>
<tr><td>»</td><td>$C_2H_5$</td><td>»</td><td>$-CH_2-CH=CH_2$</td><td>»</td></tr>
<tr><td>»</td><td>$CH_3$</td><td>»</td><td>$CH_3$</td><td>$CCl_2F$</td></tr>
<tr><td>»</td><td>$CH_3$</td><td>»</td><td>$C_2H_5$</td><td>»</td></tr>
<tr><td>»</td><td>$CH_3$</td><td>»</td><td>$-CH_2-C\equiv CH$</td><td>»</td></tr>
<tr><td>»</td><td>$CH_3$</td><td>»</td><td>$-CH_2-CH=CH_2$</td><td>»</td></tr>
<tr><td>»</td><td>$C_2H_5$</td><td>»</td><td>$CH_3$</td><td>»</td></tr>
<tr><td>»</td><td>$C_2H_5$</td><td>»</td><td>$C_2H_5$</td><td>»</td></tr>
<tr><td>»</td><td>$C_2H_5$</td><td>»</td><td>$-CH_2-C\equiv CH$</td><td>»</td></tr>
<tr><td>»</td><td>$C_2H_5$</td><td>»</td><td>$-CH_2-CH=CH_2$</td><td>»</td></tr>
<tr><td>»</td><td>$CH_3$</td><td>»</td><td>$CH_3$</td><td>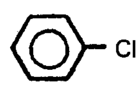</td></tr>
<tr><td>»</td><td>$CH_3$</td><td>»</td><td>$C_2H_5$</td><td>»</td></tr>
<tr><td>»</td><td>$CH_3$</td><td>»</td><td>$-CH_2-C\equiv CH$</td><td>»</td></tr>
<tr><td>»</td><td>$CH_3$</td><td>»</td><td>$-CH_2-CH=CH_2$</td><td>»</td></tr>
<tr><td>»</td><td>$C_2H_5$</td><td>»</td><td>$CH_3$</td><td>»</td></tr>
<tr><td>»</td><td>$C_2H_5$</td><td>»</td><td>$C_2H_5$</td><td>»</td></tr>
<tr><td>»</td><td>$C_2H_5$</td><td>»</td><td>$-CH_2-C\equiv CH$</td><td>»</td></tr>
<tr><td>»</td><td>$C_2H_5$</td><td>»</td><td>$-CH_2-CH=CH_2$</td><td>»</td></tr>
<tr><td>»</td><td>$CH_3$</td><td>»</td><td>$CH_3$</td><td>dimer</td></tr>
<tr><td>»</td><td>$CH_3$</td><td>»</td><td>$C_2H_5$</td><td>»</td></tr>
<tr><td>»</td><td>$CH_3$</td><td>»</td><td>$-CH_2-C\equiv CH$</td><td>»</td></tr>
<tr><td>»</td><td>$CH_3$</td><td>»</td><td>$-CH_2-CH=CH_2$</td><td>»</td></tr>
<tr><td>»</td><td>$C_2H_5$</td><td>»</td><td>$CH_3$</td><td>»</td></tr>
<tr><td>»</td><td>$C_2H_5$</td><td>»</td><td>$C_2H_5$</td><td>»</td></tr>
<tr><td>»</td><td>$C_2H_5$</td><td>»</td><td>$-CH_2-C\equiv CH$</td><td>»</td></tr>
<tr><td>»</td><td>$C_2H_5$</td><td>»</td><td>$-CH_2-CH=CH_2$</td><td>»</td></tr>
</table>

Die N-sulfenylierten Oximcarbamate der Formel (I) werden

a) durch Umsetzung der Oxime der Formel (II) mit sulfenylierten Carbamoylhalogeniden der Formel (III)
oder
b) durch Umsetzung der Oximcarbamate der Formel (IV) mit Sulfenchloriden der Formel (V) dargestellt.

Verwendet man 3,3-Dimethyl-1-methoximino-1-methylmercapto-butan-2-on und N-Methyl-N-dichlorfluormethylmercapto-carbamoylfluorid als Ausgangsstoffe, so kann der Reaktionsablauf durch das folgende Formelschema wiedergegeben werden (Verfahren a):

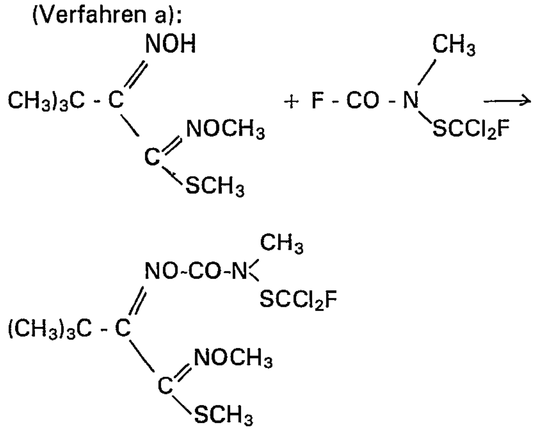

Verwendet man 1-Methylthio-1-oximino-2-methoximino-propan und N,N'-Bis-(fluorcarboyl)-thio-bis-methylamin als Ausgangsstoffe, so kann der Reaktionsablauf durch das folgende Formelschema wiedergegeben werden (Verfahren a):

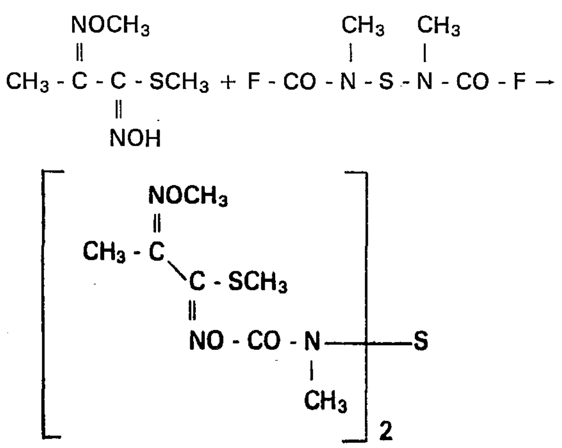

Verwendet man 1-Methylthio-1-methylcarbamoyl-oximino-2-methoximino-propan und 4-Chlorphenyl-sulfenylchlorid als Ausgangsstoffe, so kann der Reaktionsablauf durch das folgende Formelschema wiedergegeben werden (Verfahren b):

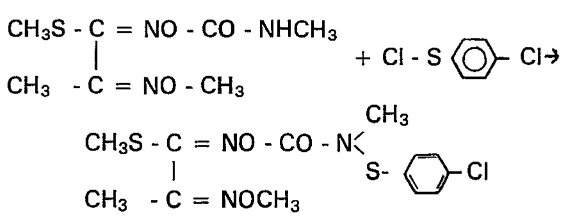

Als Verdünnungsmittel kommen für die Umsetzungen gemäss Verfahren (a) und (b) vorzugsweise alle inerten organischen Lösungsmittel in Frage. Hierzu gehören vorzugsweise Kohlenwasserstoffe wie Toluol oder Cyclohexan, Ketone, wie Diethylketon, insbesondere Aceton und Methylethylketon; Nitrile, wie Propionitril, insbesondere Acetonitril; Ether, wie Tetrahydrofuran oder Dioxan; Formamide, wie insbesondere Dimethylformamid und halogenierte Kohlenwasserstoffe, wie Methylenchlorid, Tetrachlorkohlenstoff oder Chloroform.

Die Umsetzungen gemäss Verfahren (a) und (b) werden in Gegenwart eines Säurebinders vorgenommen. Man kann alle üblicherweise verwendbaren anorganischen und organischen Säurebinder zugeben. Hierzu gehören vorzugsweise Alkalicarbonate, wie beispielsweise Natriumcarbonat, Kaliumcarbonat und Natriumhydrogencarbonat, ferner niedere tertiäre Alkylamino, Cycloalkylamine oder Arylalkylamine, wie beispielsweise Triethylamin, N,N-Dimethyl-benzylamin, Dicyclohexylamin, weiterhin Pyridin und Diazabicyclooctan.

Die Reaktionstemperaturen können bei der Durchführung des Verfahrens (a) in einem grösseren Bereich variiert werden. Im allgemeinen arbeitet man zwischen 0 und 100°C, vorzugsweise zwischen 10 und 80°C.

Bei der Durchführung des Verfahrens (a) setzt man vorzugsweise auf 1 Mol der Verbindung der Formel (II) 1 bis 2 Mol, für den Fall eines dimeren Produktes 0,5 Mol, an Carbamoylhalogenid der Formel (III) und 1 bis 2 Mol Säurebinder ein. Die Isolierung der Verbindungen der Formel (I) erfolgt in allgemein üblicher und bekannter Weise.

Die Reaktionstemperaturen können bei der Durchführung des Verfahrens (b) in einem grösseren Bereich variiert werden. Im allgemeinen arbeitet man zwischen 0 und 100°C, vorzugsweise zwischen 10 und 50°C.

Bei der Durchführung des Verfahrens (b) werden die Ausgangsstoffe vorzugsweise in molaren Mengen eingesetzt. Die Isolierung der Verbindungen der Formel (I) erfolgt nach üblichen Methoden.

Die für das Verfahren (a) als Ausgangsstoffe verwendbaren Oxime sind durch die Formel (II) allgemein definiert.

Bevorzugte Oxime der Formel (II) sind solche deren Reste $R^1$, $R^2$ und X die bei den Verbindungen der Formel (I) angegebene bevorzugte und besonders bevorzugte Bedeutung besitzen.

$R^9$ oder $R^{10}$ stehen bevorzugt für $C_{1-4}$-Alkyl, $C_{2-4}$-Alkenyl, $C_{2-4}$-Alkinyl, $C_{1-4}$-Halogenalkyl, mit bis zu 3 Halogenatomen, Alkoxyalkyl mit bis zu 2 C-Atomen in jedem Alkylteil und für Wasserstoff (es darf dabei nur jeweils einer der Reste $R^9$ oder $R^{10}$ für Wasserstoff stehen).

Ganz besonders bevorzugt stehen $R^9$ oder $R^{10}$ für Methyl, Ethyl, Propargyl, Allyl oder Wasserstoff (wobei nur einer der Reste $R^9$ oder $R^{10}$ für Wasserstoff stehen darf).

Oxime der Formel (II) werden zum Teil erhalten, indem man Ketone der Formel (VI)

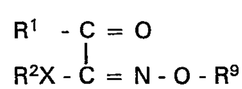

(VI)

für den Fall, dass $R^9$ für Wasserstoff steht, mit Hydroxylaminoethern bzw. deren Salze der Formel

$$R_{10} - ONH_2 \times H\,Hal \qquad (VII)$$

in welcher

$R^{10}$ die oben angegebene Bedeutung hat und Hal für Halogen, insbesondere Chlor steht

in Gegenwart eines organischen Lösungsmittels wie beispielsweise Ethanol und gegebenenfalls in Gegenwart einer Hilfsbase wie beispielsweise Natriumacetat bei Temperaturen zwischen 20°C und 120°C, vorzugsweise zwischen 50 und 100°C umsetzt. Die Isolierung der Verbindungen (II) erfolgt in der üblichen Weise, z.B. indem man das Reaktionsgemisch mit Wasser versetzt und den Niederschlag abfiltriert. Gegebenenfalls können die Oxime auch durch Umkristallisieren gereinigt werden.

Oxime der Formel (II) werden zum Teil erhalten indem man für den Fall, dass $R^9$ die unter $R^{10}$ angegebene Bedeutung hat, die Ketone der Formel VI mit Hydroxylamin bzw. seinen Salzen in Gegenwart eines organischen Lösungsmittels wie beispielsweise Ethanol und gegebenenfalls in Gegenwart einer Hilfsbase wie beispielsweise Natriumacetat bei Temperaturen zwischen 20°C und 120°C, vorzugsweise zwischen 50 und 100°C umsetzt. Die Isolierung der Verbindungen (II) erfolgt in der üblichen Weise, z.B. indem man das Reaktionsgemisch mit Wasser versetzt und den Niederschlag abfiltriert. Gegebenenfalls können die Oxime auch durch Umkristallisieren gereinigt werden.

Die Oxime der Formel (II) sind Gegenstand einer eigenen älteren Anmeldung, die noch nicht zum Stand der Technik gehört (Deutsche Anmeldung P 3 039 269.9).

Die ausserdem für die erfindungsgemässe Umsetzung (a) als Ausgangsstoffe benötigten sulfenylierten Carbamoylhalogenide sind durch die Formel (III) allgemein definiert. In dieser Formel steht $R^5$ vorzugsweise für Methyl oder Ethyl.

$R^6$ steht vorzugsweise für Alkyl mit 1 bis 4 Kohlenstoffatomen, Halogenalkyl mit 1 bis 2 Kohlenstoff- und bis zu 5 Halogenatomen, wie insbesondere Fluor- und Chloratomen, beispielsweise seien Trifluormethyl, Chlor-difluor-methyl, Dichlor-fluor-methyl und Trichlormethyl genannt, gegebenenfalls substituiertes Phenyl, wobei als Substituenten vorzugsweise genannt seien: Halogen, insbesondere Fluor, Chlor oder Brom, Alkyl mit 1 bis 2 Kohlenstoffatomen und Halogenalkyl mit 1 bis 2 Kohlenstoffatomen und bis zu 5 Halogenatomen, wie insbesondere Fluor- und Chloratomen, beispielsweise sei die Trifluormethylgruppe genannt, Alkoxycarbonyl mit 1 bis 4 Kohlenstoffatomen im Alkoxyteil, sowie für den gleichen Rest, an den die Gruppierung - S $R^6$ gebunden ist. Ferner steht $R^6$ vorzugsweise für den Rest $-NR^8-SO_2-R^7$, wobei $R^8$ vorzugsweise für Alkylk mit 1 bis 4 Kohlenstoffatomen steht, $R^7$ steht vorzugsweise für Alkyl und Dialkylamino mit jeweils 1 bis 4 Kohlenstoffatomen in jedem Alkylteil sowie für gegebenenfalls substituiertes Phenyl, wobei als Substituenten vorzugsweise in Frage kommen: Halogen, insbesondere Fluor, Chlor oder Brom, Alkyl mit 1 bis 2 Kohlenstoffatomen, Halogenalkyl mit 1 bis 2 Kohlenstoff- und bis zu 5 Halogenatomen, wie insbesondere Fluor- und Chloratomen, beispielsweise sei Trifluormethyl genannt, Cyano und Nitro.

Als Ausgangsstoffe der Formel (III) seien beispielsweise genannt:

N-Fluordichlormethylsulfenyl-N-phenyl-carbamidsäurefluorid
N,N'-Bis-(fluorcarbonyl)-thio-bis-methylamin
N-Methyl-N-trichlormethylsulfenyl-carbamidsäurefluorid
N-Methyl-N-fluordichlormethylsulfenyl-carbamidsäurefluorid
N-Methyl-N-chlordifluormethylsulfenyl-carbamidsäurefluorid
N-Methyl-N-(3-trifluormethylphenyl)-sulfenyl--carbamidsäurefluorid
N-Methyl-N-(methoxycarbonyl-sulfenyl)-carbamidsäurefluorid
N-Methyl-N-[(3-methylphenyl-sulfenyl)-methylaminosulfenyl)]-carbamidsäurefluorid
N-Methyl-N-(4-chlorphenyl)-sulfenyl-carbamidsäurefluorid
N-Methyl-N-[(4-methylphenyl-sulfenyl)]-methylaminosulfenylcarbamidsäurefluorid
und die entsprechenden Carbamidsäure-chloride.

Die sulfenylierten Carbamoylhalogenide der Formel (III) sind bekannt oder lassen sich nach allgemein üblichen und bekannten Verfahren herstellen. Man erhält sie z.B. durch Umsetzung der entsprechenden Carbamidsäurehalogenide mit den entsprechenden Sulfenchloriden (vgl. Deutsche Auslegeschrift 1 298 096, US-Patentschrift 3 939 192, Deutsche Offenlegungsschrift 2 357 930 und 2 409 463).

Die für das Verdahren (b) als Ausgangsstoffe verwendeten Oximcarbamate sind durch die Formel (IV) allgemein definiert. In der Formel (IV) stehen $R^1$, $R^2$ und X bevorzugt und besonders bevorzugt für die Substituenten, die bei den N-sulfenylierten Oximcarbamaten der Formel (I) bereits bevorzugt und besonders bevorzugt genannt werden.

$R^{11}$ oder $R^{12}$ stehen bevorzugt für $C_{1-4}$-Alkyl, $C_{2-4}$-Alkenyl, $C_{2-4}$-Alkinyl, $C_{1-4}$-Halogenalkyl mit bis zu 3 Halogenatomen, Alkoxyalkyl mit bis zu 2 C-Atomen in jedem Alkylteil und den Rest $-\overset{\overset{O}{\|}}{C}-NH-R^5$ (es darf dabei nur jeweils einer der Reste $R^{11}$ oder $R^{12}$ für den Rest $-\overset{\overset{O}{\|}}{C}-NH-R^5$ stehen). $R^5$ steht vorzugsweise für Methyl oder Ethyl.

Ganz besonders bevorzugt stehen $R^{11}$ oder $R^{12}$ für Methyl, Ethyl, Propargyl, Allyl oder den Rest $-\overset{\overset{O}{\|}}{C}-NH-R^5$ (wobei nur einer der Reste $R^{11}$ oder $R^{12}$ für $-\overset{\overset{O}{\|}}{C}-NH-R^5$ stehen darf).

Die Oximcarbamate der Formel (IV) werden erhalten, indem man die Oxime der Formel (II) mit Isocyanaten der Formel (VIII)

$$R^5 - N = C = O \qquad (VIII)$$

in welcher

$R^5$ die oben angegebene Bedeutung hat und insbesondere für Methyl steht

in einem inerten organischen Verdünnungsmittel und gegebenenfalls unter Zusatz eines Katalysators wie Triethylamin oder einer organischen Zinnverbindung wie Dibutyl-Zinn-dilaurat umsetzt.

Als Verdünnungsmittel seien genannt Kohlenwasserstoffe wie Benzol, Toluol, Cyclohexan oder Petrolether, halogenierte Kohlenwasserstoffe wie z.B. Chloroform, Methylenchlorid oder Chlorbenzol, Ether wie Diethylether, Dioxan oder Tetrahydrofuran und Ketone wie Aceton oder Methylisobutylketon sowie Essigester.

Die Herstellung erfolgt in einem molaren Verhältnis der Oxime der Formel (II) zu den Isocyanaten der Formel (VIII) von 1 : 1. Bevorzugt kann auch ein Überschuss der Isocyanate der Formel (VIII) verwendet werden.

Die Umsetzung erfolgt bei Temperaturen von 0 bis 100°C und einem Druck von 1 bar.

Die Oximcarbamate der Formel (IV) sind Gegenstand einer eignen älteren Anmeldung, die noch nicht zum Stand der Technik gehört. (Deutsche Anmeldung P 3 039 269.9.)

Die ausserdem für die erfindungsgemässe Umsetzung (b) als Ausgangsstoffe benötigten Sulfenchloride sind durch die Formel (V) allgemein definiert. In dieser Formel steht $R^6$ vorzugsweise für die Reste, die bei den Carbonylhalogeniden der Formel (III) bereits vorzugsweise genannt wurden.

Als Ausgangsstoffe der Formel (V) seien beispielsweise genannt:

Trichlormethylsulfenchlorid
Dichlorfluormethylsulfenchlorid
Chlordifluormethylsulfenchlorid
Trifluormethylsulfenchlorid
Phenylsulfenchlorid
2,4-Dichlorphenylsulfenchlorid
3-Trifluormethylphenylsulfenchlorid
3-Methylphenylsulfenchlorid
Methylsulfenchlorid
4-Chlor-3-trifluor-methylphenylsulfenylchlorid
Methoxycarbonylsulfenylchlorid
Ethoxycarbonylsulfenylchlorid.

Die Sulfenchloride der Formel (V) sind allgemein bekannte Verbindungen der organischen Chemie.

Die Wirkstoffe eignen sich bei guter Pflanzenverträglichkeit und günstiger Warmblütertoxizität zur Bekämpfung von tierischen Schädlingen, insbesondere Insekten, Spinnentieren und Nematoden, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spec.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp.

Aus der Ordnung der Anoplura z.B. Phylloxera vastatrix, Pemphigus spp., Pediculus humanus corporis, Haematopinus spp., Linognathus spp.

Aus der Ordnung der Mallophaga z.B. Trichodectes spp., Damalinea spp.

Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.

Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp. Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites soridus, Ceuthorrhynchus assimilis. Hypera postica, Dermestes spp., Trogoderma spp., Anthrenus spp., Attagenus spp., Lyctuss spp., Meligethes aeneus, Ptinus spp., Niptus hololeucus Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp.,
Aus der Ordnung der Arachnida z.B. Scorpio maurus, Latrodectus mactans.
Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp.

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp.

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/ oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z.B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kiesellsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengel; als Emulgier- und/oder schaumerzeugende Mittel kommen in Frage: z.B. nichtionogene und anionische Emulgatoren, wie Polyoxyäthylen-Fettsäure-Ester, Polyoxyäthylen-Fettalkohol-Äther, z.B. Alkylarylpolyglykoläther, Alkylsulfonate, Alkylsulfate, Arylsulfonate sowie Eiweisshydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige und latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azol-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90%.

Die erfindungsgemässen Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Die erfindungsgemässen Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne dass der zugesetzte Synergist selbst aktiv wirksam sein muss.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 100 Gew.-% Wirkstoff, vorzugsweise zwischen 0,0001 und 1 Gew.-% liegen.

Die Anwendung geschieht in einer den Anwendungsformen angepassten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

*Herstellungsbeispiele*

*Beispiel 1*

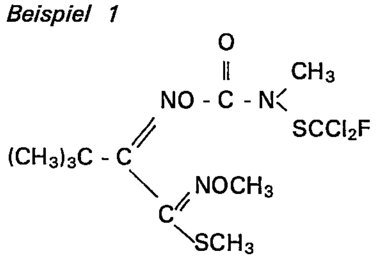

5,1 g (0,025 Mol) 3,3-Dimethyl-1-methylmercapto-1-methoximino-2-oximino-butan und 5,25 g (0,025 Mol) N-Dichlorfluormethansulfenyl-N-methyl-carbamidsäurefluorid werden in 100 ml absoluten Dioxan gelöst und unter Rühren tropfenweise mit 2,55 g (0,025 Mol) Triethylamin versetzt. Es wird eine Stunde bei 25°C gerührt der Ansatz dann auf 250 ml Wasser gegossen und mit Methylenchlorid extrahiert. Nach Trocknen über Natriumsulfat wird das Lösungsmittel im Vakuum entfernt und der Rückstand mit Petrolether verrührt. Ausbeute 8,5 g (86% der Theorie), Fp 62 - 64°C.

Herstellung der Vorprodukte

a) 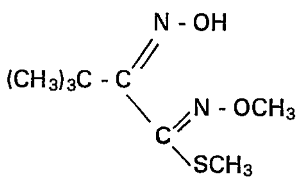

73,8 g (0,39 Mol) 3,3-Dimethyl-1-methoximino-1-methyl-mercapto-butan-2-on, 81,3 g (1,17 Mol) Hydroxylamin-Hydrochlorid und 95,9 g (1,17 Mol) Natriumacetat wurden in 500 ml Ethanol gelöst und 4 Stunden am Rückfluss gekocht. Nach Zugabe der gleichen Menge Hydroxylamin-Hydrochlorid und Natriumacetat wurde noch weitere 4 Stunden am Rückfluss gekocht und die Reaktionsmischung anschliessend im Vakuum weitgehend vom Lösungsmittel befreit. Der Rückstand wurde mit Wasser versetzt, die entstandene Essigsäure mit Natriumhydrogencarbonat-Lösung neutralisiert und das Produkt mit Methylenchlorid extrahiert. Nach Trocknen der organischen Phase über Natriumsulfat wurde das Lösungsmittel im Vakuum abgezogen und der Rückstand nach Verreiben mit Diisopropylether abfiltriert.

Ausbeute: 57,1 g (72% der Theorie), Fp. 137 bis 138°C.

b) 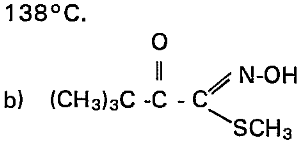

146 g (1 Mol) 1-Methylmercaptopinakolin wurden mit 180 g 30%iger Natriummethylat-Lösung in Methanol vermischt und bei 0°C unter Kühlung mit 117,2 g Iso-Amylnitrit tropfenweise versetzt. Anschliessend liess man den Ansatz langsam auf Raumtemperatur kommen.

Es wurde noch 4 Stunden bei Raumtemperatur gerührt, die Hauptmenge Methanol im Vakuum entfernt, der Rückstand mit Wasser versetzt, die wässrige Lösung 3 mal mit Chloroform ausgeschüttelt, die wässrige Phase mit konzentrierter Salzsäure neutralisiert und das Produkt mit Methylenchlorid ausgeschüttelt. Nach Trocknen der organischen Phase über Natriumsulfat wurde das Lösungsmittel im Vakuum entfernt und der Rückstand mit Petrolether kristallisiert.

Ausbeute: 116 g (66% der Theorie), Fp. 59 bis 62°C.

*Beispiel 2*

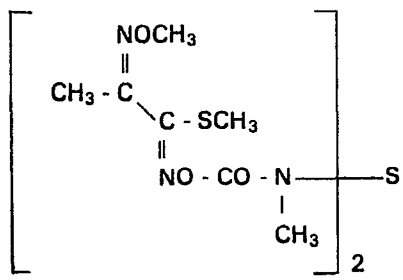

15,5 g (0,09 Mol) 1-Methylthio-1-oximino-2-methoximino-propan und 8,4 g (0,045 Mol) N,N'-Bis-(fluorcarbonyl)-thio-bis-methylamin werden in 50 ml wasserfreiem Dioxan unter Rühren bei 20 bis 30°C tropfenweise mit 9,3 g (0,09 Mol) Triethylamin versetzt. Nach 12stündigem Rühren bei Raumtemperatur wird das Reaktionsgemisch auf Eiswasser gegossen und mit Methylenchlorid mehrmals extrahiert.

Die vereinigten organischen Phasen werden über Natriumsulfat getrocknet und durch Abdestillieren des Lösungsmittels im Vakuum eingeengt und am Hochvakuum entgast.

Man erhält 20 g (95% der Theorie) N,N'-Bis-[1-Methylthio-1-oximinocarbonyl-2-methoximino-propan]-thio-bis-methylamin vom Schmelzpunkt 96 bis 102°C.

Herstellung des Vorproduktes

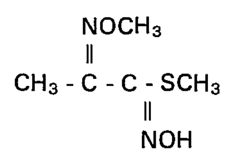

Eine Mischung aus 45 g (0,33 Mol) 1-Methylthio-1-oximino-propan-2-on, 56 g (0,67 Mol) Hydroxylaminmethylether-Hydrochlorid, 55 g (0,67 Mol) Natriumacetat und 400 ml Ethanol wurde 2 h am Rückfluss erhitzt.

Die Reaktionsmischung wurde auf die Hälfte eingeengt und mit verdünnter KOH aufgenommen. Man extrahiert zweimal mit $CHCl_3$ ein. Die $H_2O$-Phase wird dann dreimal mit $CHCl_3$ extrahiert, über $Na_2SO_4$ getrocknet und eingeengt. Destillation am Kugelrohrofen bei 150 - 170°C/0,3 Torr ergab ca. 40 g eines wasserklaren, zähen Öls, welches allmählich auskristallisiert.

Ausbeute: 70% der Theorie 1-Methylthio-1-oximino-2-methoximino-propan.

Fp: 52 - 74°C.

Analog werden die folgenden Beispiele der Tabelle erhalten

$$\begin{array}{l} R^1\ - C = N - OR^4 \\ \qquad | \\ R^2X - C = N - OR^3 \end{array} \qquad (I)$$

| Bsp. Nr. | $R^1$ | $R^2$ | $R^3$ | $R^4$ | $R^6$ | X | Fp. (°C) bzw. Brechungs-index |
|---|---|---|---|---|---|---|---|
| 3 | $(CH_3)_3$- | $-CH_3$ | $-C_2H_5$ | $-CO-NCH_3-SR^6$ | $CCl_2F$ | S | 1,5108 |
| 4 | $(CH_3)_3$ | $-CH_3$ | $-C_2H_5$ | $-CO-NCH_3-SR^6$ | $CCl_3$ | S | 1,5304 |
| 5 | $(CH_3)_3$ | $-CH_3$ | $-CH_3$ | $-CO-NCH_3-SR^6$ | dimer | S | 156 - 157°C |
| 6 | $(CH_3)_3$ | $-CH_3$ | $-CH_3$ | $-CO-NCH_3-SR^6$ | $CCl_3$ | S | 62 - 64°C |
| 7 | $-CH_3$ | $-Ch_3$ | $-CONCH_3-SR^6$ | $-CH_3$ | $CCl_3$ | S | 1,5505 |
| 8 | $-CH_3$ | $-C_2H_5$ | $-CONCH_3-SR^6$ | $-CH_3$ | $CCl_3$ | S | 1,5445 |
| 9 | $-CH_3$ | $-CH_3$ | $-CONCH_3-SR^6$ | $-C_2H_5$ | $CCl_3$ | S | 1,5459 |
| 10 | $-CH_3$ | $-CH_3$ | $-CONCH_3-SR^6$ | $-C_2H_5$ | dimer | S | 1,5309 |
| 11 | $-CH_3$ | $-C_2H_5$ | $-CONCH_3-SR^6$ | $-CH_3$ | dimer | S | 1,5220 |
| 12 | $-CH_3$ | $-C_2H_5$ | $-CONCH_3-SR^6$ | $-C_2H_5$ | dimer | S | 1,5198 |
| 13 | $-CH_3$ | $-CH_3$ | $-CH_3$ | $-CO-NCH_3-SR^6$ | dimer | S | 1,5283 |
| 14 | $-CH_3$ | $-CH_3$ | $-C_2H_5$ | $-CO-NCH_3-SR^6$ | dimer | S | 1,5284 |
| 15 | $-CH_3$ | $-CH_3$ | $-CH_3$ | $-CO-NCH_3-SR^6$ | $CCl_2F$ | S | 1,5330 |
| 16 | $-CH_3$ | $-CH_3$ | $-CH_3$ | $-CO-NCH_3-SR^6$ | $CCl_3$ | S | 1,5580 |
| 17 | $-CH_3$ | $-CH_3$ | $-CH_2-C\equiv CH$ | $-CO-NCH_3-SR^6$ | $CCl_2F$ | S | 1,5404 |
| 18 | $-CH_3$ | $-CH_3$ | $-C_2H_5$ | $-CO-NCH_3-SR^6$ | $CCl_2F$ | S | 1,5267 |
| 19 | $-CH_3$ | $-CH_3$ | $-CH_2-CH=CH_2$ | $-CO-NCH_3-SR^6$ | $CCl_2F$ | S | 1,5339 |
| 20 | $-CH_3$ | $-CH_3$ | $-CH_2-CH=CH_2$ | $-CO-NCH_3-SR^6$ | dimer | S | zähes Öl |
| 21 | $-CH_3$ | $-CH_3$ | $-CH_2-C\equiv CH$ | $-CO-NCH_3-SR^6$ | dimer | S | 112°C |
| 22 | $-CH_3$ | $-CH_3$ | $CONCH_3SR^6$ | $CH_3$ | dimer | S | |

*Beispiel A*

Drosophila-Test
Lösungsmittel: 3 Gewichtsteile Dimethylformamid
Emulgator: 1 Gewichtsteil Alkylarylpolyglykoläther

Zur Herstellung einer zweckmässigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

1 $cm^3$ der Wirkstoffzubereitung wird auf die Filterpapierscheibe (7 cm Durchmesser) aufpipettiert. Man legt diese nass auf die Öffnung eines Glasgefässes, in dem sich 50 Taufliegen (Drosophila melanogaster) befinden und bedeckt es mit einer Glasplatte.

Nach der gewünschten Zeit bestimmt man die Abtötung in %. Dabei bedeutet 100%, dass alle Fliegen abgetötet wurden; 0% bedeutet, dass keine Fliegen abgetötet wurden.

Bei diesem Test zeigen z.B. die folgenden Verbindungen der Herstellungsbeispiele überlegene Wirksamkeit gegenüber dem Stand der Technik: 1,3.

*Beispiel B*

Laphygma-Test
Lösungsmittel: 3 Gewichtsteile Dimethylformamid
Emulgator: 1 Gewichtsteil Alkylarylpolyglykoläther

Zur Herstellung einer zweckmässigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentration behandelt und mit Raupen des Eulenfalters (Laphygma frugiperda) besetzt, solange die Blätter noch feucht sind.

Nach der gewünschten Zeit wird die Abtötung in % bestimmt. Dabei bedeutet 100%, dass alle Raupen abgetötet wurden; 0% bedeutet, dass keine Raupen abgetötet wurden.

Bei diesem Test zeigen z.B. die folgenden Verbindungen der Herstellungsbeispiele überlegene Wirksamkeit gegenüber dem Stand der Technik: 7, 8, 22, 11, 13, 10, 12, 9, 15.

*Beispiel C*

Tetranychus-Test
Lösungsmittel: 3 Gewichtsteile Dimethylformamid
Emulgator: 1 Gewichtsteil Alkylarylpolyglykoläther

Zur Herstellung einer zweckmässigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Bohnenpflanzen (Phaseolus vulgaris), die stark von allen Entwicklungsstadien der gemeinen Spinnmilbe oder Bohnenspinnmilbe (Tetranychus urticae) befallen sind, werden durch Tauchen in die Wirkstoffzubereitung der gewünschten Konzentration behandelt.

Nach der gewünschten Zeit wird die Abtötung in % bestimmt. Dabei bedeutet 100%, dass alle Spinnmilben abgetötet wurden; 0% bedeutet, dass keine Spinnmilben abgetötet wurden.

Bei diesem Test zeigen z.B. die folgenden Verbindungen der Herstellungsbeispiele überlegene Wirksamkeit gegenüber dem Stand der Technik: .

*Beispiel D*

Grenzkonzentrations-Test/Bodeninsekten
Testinsekt: Phorbia antiqua-Maden (im Boden)
Lösungsmittel: 3 Gewichtsteile Aceton
Emulgator: 1 Gewichtsteil Alkylarylpolyglykoläther

Zur Herstellung einer zweckmässigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den Boden in Töpfe und lässt diese bei Raumtemperatur stehen.

Nach 24 Stunden werden die Testtiere in den behandelten Boden gegeben und nach weiteren 2 bis 7 Tagen wird der Wirkungsgrad des Wirkstoffs durch Auszählen der toten und lebenden Testinsekten in % bestimmt. Der Wirkungsgrad ist 100%, wenn alle Testinsekten abgetötet worden sind, er ist 0%, wenn noch genau so viele Testinsekten leben wie bei der unbehandelten Kontrolle.

Bei diesem Test zeigen z.B. die folgenden Verbindungen der Herstellungsbeispiele überlegene Wirkung gegenüber dem Stand der Technik: 22, 10, 9, 1, 2, 3.

*Beispiel E*

Grenzkonzentrations-Test/Wurzelsystemische Wirkung
Testinsekt: Myzus persicae
Lösungsmittel: 3 Gewichtsteile Aceton
Emulgator: 1 Gewichtsteil Alkylarylpolyglykoläther

Zur Herstellung einer zweckmässigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den behandelten Boden in Töpfe und bepflanzt diese mit Kohl (Brassica oleracea). Der Wirkstoff kann so von den Pflanzenwurzeln aus dem Boden aufgenommen und in die Blätter transportiert werden.

Für den Nachweis des wurzelsystemischen Effektes werden nach 7 Tagen ausschliesslich die Blätter mit den obengenannten Testtieren besetzt. Nach weiteren 2 Tagen erfolgt die Auswertung durch Zählen oder Schätzen der toten Tiere. Aus den Abtötungszahlen wird die wurzelsystemische Wirkung des Wirkstoffs abgeleitet. Sie ist 100%, wenn alle Testtiere abgetötet sind und 0%, wenn noch genau so viele Testinsekten leben wie bei der unbehandelten Kontrolle.

Bei diesem Test zeigen z.B. die folgenden Verbindungen der Herstellungsbeispiele überlegene Wirkung gegenüber dem Stand der Technik: 22, 14, 13, 9, 5, 6, 1, 4, 3.

*Beispiel F*

Grenzkonzentrations-Test/Wurzelsystemische Wirkung
Testinsekt: Phaedon cochleariae-Larven
Lösungsmittel: 3 Gewichtsteile Aceton
Emulgator: 1 Gewichtsteil Alkylarylpolyglykoläther

Zur Herstellung einer zweckmässigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den Boden in Töpfe und bepflanzt diese mit Kohl (Brassica oleracea). Der Wirkstoff kann so von den Pflanzenwurzeln aus dem Boden aufgenommen und in die Blätter transportiert werden.

Für den Nachweis des wurzelsystemischen Effektes werden nach 7 Tagen ausschliesslich die Blätter mit den obengenannten Testtieren besetzt. Nach weiteren 2 Tagen erfolgt die Auswertung durch Zählen oder Schätzen der toten Tiere. Aus den Abtötungszahlen wird die wurzelsystemische Wirkung des Wirkstoffs abgeleitet. Sie ist 100%, wenn alle Testtiere abgetötet sind und 0%, wenn noch genau so viele Testinsekten leben wie bei der unbehandelten Kontrolle.

Bei diesem Test zeigen z.B. die folgenden Verbindungen der Herstellungsbeispiele überlegene Wirkung gegenüber dem Stand der Technik: 22, 14, 13, 5, 6, 4, 3.

**Patentansprüche**

1. N-sulfenylierte Oximcarbamate der Formel (I)

$R^1$ - C = N - $OR^4$
|  (I)
$R^2X$ - C = N - $OR^3$

in welcher
$R^1$ für Alkyl mit 1 bis 4 Kohlenstoffatomen, Halogenalkyl mit 1 bis 4 Kohlenstoffatomen und bis zu 5 Halogenatomen, Cycloalkyl mit bis zu 8 Kohlenstoffatomen, Alkoxyalkyl und Alkylthioalkyl mit bis zu 3 Kohlenstoffatomen in jedem Alkylteil oder für gegebenenfalls durch Halogen, CN, $NO_2$, $C_1$-$C_2$-Alkyl substituiertes Phenyl steht,
$R^2$ für Alkyl, Alkenyl, Alkinyl steht,
$R^1$ und $R^2$ gemeinsam für eine Alkylenbrücke mit 1 - 6 C-Atomen stehen und
einer der Reste $R^3$ oder $R^4$ für den Rest -C(=O)-$NR^5$-S-$R^6$ steht während der andere Rest $R^3$ oder $R^4$ für Alkyl, Alkenyl, Alkinyl, Halogenalkyl, Halogenalkenyl oder Alkoxyalkyl steht,
$R^5$ für Alkyl steht und
$R^6$ für Alkyl mit 1 bis 4 Kohlenstoffatomen, Halogenalkyl mit 1 bis 2 Kohlenstoffatomen und bis zu 5 Halogenatomen, für gegebenenfalls durch Halogen, Alkyl ($C_1$-$C_2$), Halogenalkyl ($C_1$-$C_2$) substituiertes Phenyl, für Alkoxycarbonyl mit 1 bis 4 Kohlenstoffatomen im Alkoxyteil, für Dialkylamino mit 1 bis 4 Kohlenstoffatomen in jedem Alkylteil steht oder wobei $R^6$ für den gleichen Rest steht, an dem die Gruppierung -$SR^6$ gebunden ist sowie für die Gruppierung $NR^8$-$SO_2R^7$ steht,
wobei
$R^7$ für Alkyl mit 1 bis 4 Kohlenstoffatomen, Dialkylamino mit jeweils 1 bis 4 Kohlenstoffatomen in jedem Alkylteil sowie für gegebenenfalls durch Halogen, $C_1$-$C_2$-Halogenalkyl, CN oder $NO_2$ substituiertes Phenyl steht,
$R^8$ für Alkyl mit 1 bis 4 Kohlenstoffatomen steht und
X für O oder S steht.

2. Verfahren zur Herstellung der N-sulfenylierten Oximcarbamate der Formel (I)

$R^1$ - C = N - $OR^4$
|  (I)
$R^2X$ - C = N - $OR^3$

in welcher
$R^1$ für Alkyl mit 1 bis 4 Kohlenstoffatomen, Halogenalkyl mit 1 bis 4 Kohlenstoffatomen und bis zu 5 Halogenatomen, Cycloalkyl mit bis zu 8 Kohlenstoffatomen, Alkoxyalkyl und Alkylthioalkyl mit bis zu 3 Kohlenstoffatomen in jedem Alkylteil oder für gegebenenfalls durch Halogen, CN, $NO_2$, $C_1$-$C_2$-Alkyl substituiertes Phenyl steht,
$R^2$ für Alkyl, Alkenyl, Alkinyl steht,
$R^1$ und $R^2$ gemeinsam für eine Alkylenbrücke mit 1 - 6 C-Atomen stehen und
einer der Reste $R^3$ oder $R^4$ für den Rest -C(=O)-$NR^5$-S-$R^6$ steht während der andere Rest $R^3$ oder $R^4$ für Alkyl, Alkenyl, Alkinyl, Halogenalkyl, Halogenalkenyl oder Alkoxyalkyl steht,
$R^5$ für Alkyl steht und
$R^6$ für Alkyl mit 1 bis 4 Kohlenstoffatomen, Halogenalkyl mit 1 bis 2 Kohlenstoffatomen und bis zu 5 Halogenatomen, für gegebenenfalls durch Halogen, Alkyl ($C_1$-$C_2$), Halogenalkyl ($C_1$-$C_2$) substituiertes Phenyl, für Alkoxycarbonyl mit 1 bis 4 Kohlenstoffatomen im Alkoxyteil, für Dialkylamino mit 1 bis 4 Kohlenstoffatomen in jedem Alkylteil steht oder wobei $R^6$ für den gleichen Rest steht, an dem die Gruppierung -$SR^6$ gebunden ist sowie für die Gruppierung $NR^8$-$SO_2R^7$ steht,
wobei
$R^7$ für Alkyl mit 1 bis 4 Kohlenstoffatomen, Dialkylamino mit jeweils 1 bis 4 Kohlenstoffatomen in jedem Alkylteil sowie für gegebenenfalls durch Halogen, $C_1$-$C_2$-Halogenalkyl, CN oder $NO_2$ substituiertes Phenyl steht,
$R^8$ für Alkyl mit bis 4 Kohlenstoffatomen steht und
X für O oder S steht.
dadurch gekennzeichnet, dass man
a) Oxime der Formel (II)

$R^1$ - C = N - O - $R^{10}$
|  (II)
$R^2X$ - C = N - O - $R^9$

in welcher
$R^1$, $R^2$ und X die oben angegebenen Bedeutungen haben,
einer der Reste $R^9$ oder $R^{10}$ für H steht und der andere Rest $R^9$ oder $R^{10}$ für Alkyl, Alkenyl, Alkinyl, Halogenalkyl, Halogenalkenyl oder Alkoxyalkyl steht mit sulfenylierten Carbamoylhalogeniden der Formel (III)

Hal - CO - N($R^5$)(S - $R^6$)  (III)

in welcher
$R^5$ und $R^6$ die oben angegebene Bedeutung haben, und
Hal für Fluor oder Chlor steht,
in Gegenwart eines Verdünnungsmittels und eines säurebindenden Mittels umsetzt, oder
b) Oximcarbamate der Formel (IV)

$R^1$ - C = $NOR^{12}$
|  (IV)
$R^2X$ - C = $NOR^{11}$

in welcher
$R^1$, $R^2$ und X die oben angegebene Bedeutung haben,
einer der Reste $R^{11}$ oder $R^{12}$ für den Rest $R^5$-NH-C(=O)- steht während der andere $R^{11}$ oder $R^{12}$ für Alkyl, Alkenyl, Alkinyl, Halogenalkyl, Halogenalkenyl oder Alkoxyalkyl steht,
$R^5$ für Alkyl steht und
X für O oder S steht
mit Sulfenchloriden der Formel (V)

Cl - S- $R^6$  (V)

in welcher
$R^6$ die oben angegebene Bedeutung hat,
in Gegenwart eines Verdünnungsmittels und eines säurebindenden Mittels umsetzt.

3. N-sulfenylierte Oximcarbamate der Formel I in welcher $R^1$ für Methyl, Isopropyl, tert.-Butyl, Fluor-, Chlor-, Difluor-, Dichlor-tert.-Butyl steht; $R^2$ für Methyl oder Ethyl steht; $R^1$ und $R^2$ für eine Ethylenbrücke stehen; $R^3$ oder $R^4$ für Methyl, Ethyl, Allyl, Propargyl oder $-\overset{O}{\overset{\|}{C}}-N(CH_3)-S-R^6$ stehen [dabei muss jeweils einer der Reste $R^3$ oder $R^4$ für $-N(CH_3)-S-R^5$ stehen] und $R^6$ für Trichlormethyl, Dichlor-fluor-methyl, Halogenalkyl- oder Alkyl substituiertes Phenyl steht, sowie für den gleichen Rest an den die Gruppierung $-S-R^6$ gebunden ist; X für S steht.

4. Schädlingsbekämpfungsmittel, gekennzeichnet durch einen Gehalt an mindestens einem N-sulfenylierten Oximcarbamat der Formel (I).

5. Verwendung von N-sulfenylierten Oximcarbamaten der Formel (I) zur Bekämpfung von Schädlingen.

6. Verfahren zur Bekämpfung von Schädlingen, dadurch gekennzeichnet, dass man N-sulfenylierte Oximcarbamate der Formel (I) auf Schädlinge und/oder ihren Lebensraum einwirken lässt.

7. Verfahren zur Herstellung von Schädlingsbekämpfungsmitteln, dadurch gekennzeichnet, dass man N-sulfenylierte Oximcarbamate der Formel (I) mit Streckmitteln und/oder oberflächenaktiven Mitteln vermischt.

**Claims**

1. N-Sulphenylated oxime-carbamates of the formula (I)

$$\begin{array}{l} R^1 - C = N - OR^4 \\ \quad\ | \\ R^2X - C = N - OR^3 \end{array} \qquad (I)$$

in which

$R^1$ represents alkyl with 1 to 4 carbon atoms, halogenoalkyl with 1 to 4 carbon atoms and up to 5 halogen atoms, cycloalkyl with up to 8 carbon atoms, alkoxyalkyl or alkylthioalkyl with up to 3 carbon atoms in each alkyl part or phenyl which is optionally substituted by halogen, CN, $NO_2$ or $C_1$-$C_2$-alkyl,

$R^2$ represents alkyl, alkenyl or alkinyl,

$R^1$ and $R^2$ together represent an alkylene bridge with 1 - 6 C atoms and

one of the radicals $R^3$ or $R^4$ represents the radical $-\overset{O}{\overset{\|}{C}}-NR^5-S-R^6$ while the other radical, $R^3$ or $R^4$, represents alkyl, alkenyl, alkinyl, halogenoalkyl, halogenoalkenyl or alkoxyalkyl,

$R^5$ represents alkyl and

$R^6$ represents alkyl with 1 to 4 carbon atoms, halogenoalkyl with 1 to 2 carbon atoms und up to 5 halogen atoms, phenyl which is optionally substituted by halogen, alkyl ($C_1$-$C_2$) or halogenoalkyl ($C_1$-$C_2$), alkoxycarbonyl with 1 to 4 carbon atoms in the alkoxy part, or dialkylamino with 1 to 4 carbon atoms in each alkyl part,

or wherein $R^6$ represents the identical radical to which the grouping $-SR^6$ is bonded or represents the grouping $NR^8$-$SO_2R^7$,

wherein

$R^7$ represents alkyl with 1 to 4 carbon atoms, dialkylamino with in each case 1 to 4 carbon atoms in each alkyl part or phenyl which is optionally substituted by halogen, $C_1$-$C_2$-halogenoalkyl, CN or $NO_2$,

$R^8$ represents alkyl with 1 to 4 carbon atoms and

X represents O or S.

2. Process for the preparation of the N-sulphenylated oximecarbamate of the formula (I)

$$\begin{array}{l} R^1 - C = N - OR^4 \\ \quad\ | \\ R^2X - C = N - OR^3 \end{array} \qquad (I)$$

in which

$R^1$ represents alkyl with 1 to 4 carbon atoms, halogenoalkyl with 1 to 4 carbon atoms and up to 5 halogen atoms, cycloalkyl with up to 8 carbon atoms, alkoxyalkyl or alkylthioalkyl with up to 3 carbon atoms in each alkyl part or phenyl which is optionally substituted by halogen, CN, $NO_2$ or $C_1$-$C_2$-alkyl,

$R^2$ represents alkyl, alkenyl or alkinyl,

$R^1$ and $R^2$ together represent an alkylene bridge with 1 - 6 C atoms and

one of the radicals $R^3$ or $R^4$ represents the radical $-\overset{O}{\overset{\|}{C}}-NR^5-S-R^6$ while the other radical, $R^3$ or $R^4$, represents alkyl, alkenyl, alkinyl, halogenoalkyl, halogenoalkenyl or alkoxyalkyl,

$R^5$ represents alkyl and

$R^6$ represents alkyl with 1 to 4 carbon atoms, halogenoalkyl with 1 to 2 carbon atoms und up to 5 halogen atoms, phenyl which is optionally substituted by halogen, alkyl ($C_1$-$C_2$) or halogenoalkyl ($C_1$-$C_2$), alkoxycarbonyl with 1 to 4 carbon atoms in the alkoxy part, or dialkylamino with 1 to 4 carbon atoms in each alkyl part,

or wherein $R^6$ represents the identical radical to which the grouping $-SR^6$ is bonded or represents the grouping $NR^8$-$SO_2R^7$,

wherein

$R^7$ represents alkyl with 1 to 4 carbon atoms, dialkylamino with in each case 1 to 4 carbon atoms in each alkyl part or phenyl which is optionally substituted by halogen, $C_1$-$C_2$-halogenoalkyl, CN or $NO_2$,

$R^8$ represents alkyl with 1 to 4 carbon atoms and

X represents O or S,

characterised in that

a) oximes of the formula (II)

$$\begin{array}{l} R^1 - C = N - O - R^{10} \\ \quad\ | \\ R^2X - C = N - O - R^9 \end{array} \qquad (II)$$

in which

$R^1$, $R^2$ and X has the abovementioned meanings, one of the radicals $R^9$ or $R^{10}$ represents H and the other radical, $R^9$ or $R^{10}$, represents alkyl,

alkenyl, alkinyl, halogenoalkyl, halogenoalkenyl or alkoxyalkyl,

are reacted with sulphenylated carbamoyl halides of the formula (III)

$$\text{Hal - CO - N}\begin{matrix} R^5 \\ S - R^6 \end{matrix} \qquad (III)$$

in which

$R^5$ and $R^6$ have the abovementioned meaning and Hal represents fluorine or chlorine,

in the presence of a diluent and an acid-binding agent, or

b) oxime carbamates of the formula (IV)

$$\begin{matrix} R^1 - C = NOR^{12} \\ | \\ R^2X - C = NOR^{11} \end{matrix} \qquad (IV)$$

in which

$R^1$, $R^2$ and X have the abovementioned meaning, one of the radicals $R^{11}$ or $R^{12}$ represents the radical $R^5\text{-NH-}\overset{O}{\overset{\|}{C}}\text{-}$ while the other radical, $R^{11}$ or $R^{12}$, represents alkyl, alkenyl, alkinyl, halogenoalkyl, halogenoalkenyl or alkoxyalkyl,

$R^5$ represents alkyl and

X represents O or S,

are reacted with sulphenyl chlorides of the formula (V)

$$Cl - S - R^6 \qquad (V)$$

in which

$R^6$ has the abovementioned meaning,

in the presence of a diluent and an acid-binding agent.

3. N-Sulphenylated oxime-carbamates of the formula I in which $R^1$ represents methyl, isopropyl, tert.-butyl, or fluoro-, chloro-, difluoro-, or dichloro-tert.-butyl; $R^2$ represents methyl or ethyl; $R^1$ and $R^2$ represent an ethylene bridge; $R^3$ or $R^4$ represent methyl, ethyl, allyl, propargyl or $\text{-}\overset{O}{\overset{\|}{C}}\text{-N(CH}_3\text{)-S-R}^6$ [and at the same time one of the radicals $R^3$ or $R^4$ in each case represents $\text{-N(CH}_3\text{)-S-R}^6$] and $R^6$ represents trichloromethyl, dichloro-fluor-methyl, phenyl which is substituted by halogenoalkyl or alkyl, or the identical radical to which the grouping $S\text{-}R^6$ is bonded; and X represents S.

4. Agent for combating pests, characterised in that they contain at least one N-sulphenylated oxime-carbamate of the formula (I).

5. Use of N-sulphenylated oxime-carbamates of the formula (I) for combating pests.

6. Method of combating pests, characterised in that N-sulphenylated oxime-carbamates of the formula (I) are allowed to act on pests and/or their environment.

7. Process for the preparation of agents for combating pests, characterised in that N-sulphenylated oxime carbamates of the formula (I) are mixed with extenders and/or surface-active agents.

**Revendications**

1. Carbamates d'oximes N-sulfénylés de formule (I)

$$\begin{matrix} R^1 - C = N - OR^4 \\ | \\ R^2X - C = N - OR^3 \end{matrix} \qquad (I)$$

dans laquelle

$R^1$ représente un groupe alkyle ayant 1 à 4 atomes de carbone, halogénoalkyle ayant 1 à 4 atomes de carbone et jusqu'à 5 atomes d'halogène, cycloalkyle ayant jusqu'à 8 atomes de carbone, alcoxyalkyle et alkylthioalkyle ayant jusqu'à 3 atomes de carbone dans chaque partie alkyle ou un radical phényle éventuellement substitué par de l'halogène, CN, $NO_2$, ou un groupe alkyle en $C_1$ à $C_2$;

$R^2$ représente un groupe alkyle, alcényle, alcynyle;

$R_1$ et $R^2$ peuvent, lorsqu'ils sont pris ensemble, représenter un pont alkylène ayant 1 à 6 atomes de carbone, et

l'un des radicaux $R^3$ ou $R^4$ représente le radical $\text{-}\overset{O}{\overset{\|}{C}}\text{-NR}^5\text{-S-R}^6$, cependant que l'autre radical $R^3$ ou $R^4$ représente un groupe alkyle, alcényle, alcynyle, halogénoalkyle, halogénoalcényle ou alkoxyalkyle,

$R^5$ représente un groupe alkyle, et

$R^6$ représente un groupe alkyle ayant 1 à 4 atomes de carbone, halogénoalkyle ayant 1 à 2 atomes de carbone et jusqu'à 5 atomes d'halogènes, un radical phényle éventuellement substitué par de l'halogène, par un groupe alkyle ($C_1$-$C_2$), par un groupe halogénoalkyle ($C_1$-$C_2$), un groupe alcoxycarbonyle ayant 1 à 4 atomes de carbone dans la partie alcoxy, un groupe dialkylamino ayant 1 à 4 atomes de carbone dans chaque partie alkyle,

ou $R^6$ représente le même radical que celui sur lequel le groupement $\text{-SR}^6$ est fixé, ainsi que le groupement $NR^8\text{-}SO_2R^7$,

ou

$R^7$ représente un groupe alkyle ayant 1 à 4 atomes de carbone, dialkylamino ayant chaque fois 1 à 4 atomes de carbone dans chaque partie alkyle, ainsi qu'un radical phényle éventuellement substitué par de l'alogène, par un groupe halogénoalkyle en $C_1$-$C_2$, CN ou $NO_2$,

$R^8$ représente un groupe alkyle 1 à 4 atomes de carbone, et

X représente O ou S.

2. Procédé de préparation des carbamates d'oximes N-sulfénylés, de formule (I)

$$\begin{matrix} R^1 - C = N - OR^4 \\ | \\ R^2X - C = N - OR^3 \end{matrix} \qquad (I)$$

dans laquelle

$R^1$ représente un groupe alkyle ayant 1 à 4 atomes de carbone, halogénoalkyle ayant 1 à 4 atomes de carbone et jusqu'à 5 atomes d'halogène, cycloalkyle ayant jusqu'à 8 atomes de carbone,

alcoxyalkyle et alkylthioalkyle ayant jusqu'à 3 atomes de carbone dans chaque partie alkyle ou un radical phényle éventuellement substitué par de l'halogène, CN, $NO_2$, ou un groupe alkyle en $C_1$ à $C_2$;

$R^2$ représente un groupe alkyle, alcényle, alcynyle;

$R_1$ et $R^2$ peuvent, lorsqu'ils sont pris ensemble, représenter un pont alkylène ayant 1 à 6 atomes de carbone, et

l'un des radicaux $R^3$ ou $R^4$ représente le radical

$$-\overset{O}{\overset{\|}{C}}-NR^5-S-R^6,$$

cependant que l'autre radical $R^3$ ou $R^4$ représente un groupe alkyle, alcényle, alcynyle, halogénoalkyle, halogénoalcényle ou alkoxyalkyle,

$R^5$ représente un groupe alkyle, et

$R^6$ représente un groupe alkyle ayant 1 à 4 atomes de carbone, halogénoalkyle ayant 1 à 2 atomes de carbone et jusqu'à 5 atomes d'halogènes, un radical phényle éventuellement substitué par de l'halogène, par un groupe alkyle ($C_1$-$C_2$), par un groupe halogénoalkyle ($C_1$-$C_2$), un groupe alcoxycarbonyle ayant 1 à 4 atomes de carbone dans la partie alcoxy, un groupe dialkylamino ayant 1 à 4 atomes de carbone dans chaque partie alkyle,

ou $R^6$ représente le même radical que celui sur lequel le groupement $-SR^6$ est fixé, ainsi que le groupement $NR^8$-$SO_2R^7$,

ou

$R^7$ représente un groupe alkyle ayant 1 à 4 atomes de carbone, dialkylamino ayant chaque fois 1 à 4 atomes de carbone dans chaque partie alkyle, ainsi qu'un radical phényle éventuellement substitué par de l'halogène, par un groupe halogénoalkyle en $C_1$-$C_2$, CN ou $NO_2$,

$R^8$ représente un groupe alkyle 1 à 4 atomes de carbone, et

X représente O ou S,

procédé caractérisé en ce que:

a) on fait réagir des oximes de formule (II):

$$\begin{array}{l} R^1 \ - C = N - O - R^{10} \\ \quad\quad | \\ R^2X - C = N - O - R^9 \end{array} \qquad (II)$$

dans laquelle

$R^1$, $R^2$ et X ont les sens indiqués ci-dessus,

l'un des radicaux $R^9$ ou $R^{10}$ représente H et l'autre radical $R^9$ ou $R^{10}$ représente un groupe alkyle, alcényle, alcynyle, halogénoalkyle, halogénoalcényle ou alcoxyalkyle,

avec des halogénures de carbamoyles sulfénylés de formule (III)

$$Hal - CO - N \begin{cases} R^5 \\ S - R^6 \end{cases} \qquad (III)$$

dans laquelle

$R^5$ et $R^6$ ont les sens indiqué ci-dessus, et

Hal représente du fluor ou du chlore,

en présence d'un diluant et d'un agent de fixation des acides, ou

b) on fait réagir des carbamates d'oximes de formule (IV)

$$\begin{array}{l} R^1 \ - C = NOR^{12} \\ \quad\quad | \\ R^2X - C = NOR^{11} \end{array} \qquad (IV)$$

dans laquelle

$R^1$, $R^2$ et X ont le sens indiqué ci-dessus,

l'un des radicaux $R^{11}$ ou $R^{12}$ représente le radical

$$R^5-NH-\overset{O}{\overset{\|}{C}}-$$

cependant que l'autre radical $R^{11}$ ou $R^{12}$ représente un groupe alkyle, alcényle, alcynyle, halogénoalkyle, halogénoalcényle ou alcoxyalkyle,

$R^5$ représente un groupe alkyle, et

X représente O ou S,

avec des chlorures des sulfényles de formule (V)

$$Cl - S - R^6 \qquad (V)$$

dans laquelle

$R^6$ a le sens indiqué ci-dessus,

en présence d'un diluant et d'un agent de fixation des acides.

3. Carbamates d'oximes N-sulfénylés de formule I, dans laquelle $R^1$ représente un groupe méthyle, isopropyle, tertiobutyle, fluoro-, chloro-, difluoro-, dichloro-tertiobutyle; $R^2$ représente un groupe méthyle ou éthyle, $R^1$ et $R^2$ peuvent former un pont éthylène; $R^3$ ou $^4$ représente un groupe méthyle, éthyle, allyle, propargyle ou $-\overset{O}{\overset{\|}{C}}-N(CH_3)-S-R^6$ [l'un des radicaux $R^3$ ou $R^4$ doit alors toujours représenter $-N(CH_3)-S-R^6$], et $R^6$ représente un radical phényle substitué par un groupe trichlorométhyle, dichlorofluorométhyle, halogénoalkyle ou alkyle, ainsi que le même radical auquel le groupement $S-R^6$ est lié; et X représente S.

4. Pesticide, caractérisé par une teneur en au moins un carbamate d'oxime N-sulfénylé selon la formule (I).

5. Utilisation des carbamates d'oximes N-sulfénylés de formule (I) pour lutter contre les parasites.

6. Procédé de lutte contre les parasites, caractérisé en ce qu'on fait agir des carbamates d'oximes N-sulfénylés de formule (I) sur les parasites et/ou sur leur biotopes.

7. Procédé de préparation de pesticides, caractérisé en ce qu'on mélange des carbamates d'oximes N-sulfénylés de formule (I) avec des agents d'allongement et/ou des agents tensioactifs.